(19)

Europäisches
Patentamt
European
Patent Office
Office européen
des brevets

(11) **EP 3 902 167 A1**

(12) **EUROPEAN PATENT APPLICATION**
published in accordance with Art. 153(4) EPC

(43) Date of publication:
**27.10.2021 Bulletin 2021/43**

(21) Application number: **19898457.7**

(22) Date of filing: **20.12.2019**

(51) Int Cl.:
***H04J 14/02*** *(2006.01)*

(86) International application number:
**PCT/CN2019/127108**

(87) International publication number:
**WO 2020/125768 (25.06.2020 Gazette 2020/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.12.2018 CN 201811591169**

(71) Applicant: **ZTE Corporation**
**shenzhen Guangdong 518057 (CN)**

(72) Inventors:
• **TIAN, Hongliang**
  **Shenzhen, Guangdong 518057 (CN)**
• **YANG, Bo**
  **Shenzhen, Guangdong 518057 (CN)**
• **CHEN, Aimin**
  **Shenzhen, Guangdong 518057 (CN)**

(74) Representative: **Canzler & Bergmeier**
**Patentanwälte**
**Partnerschaft mbB**
**Friedrich-Ebert-Straße 84**
**85055 Ingolstadt (DE)**

(54) **ROUTING COMBINER, ROUTING WAVE COMBINING METHOD, WAVELENGTH DIVISION ROUTING METHOD, AND NETWORK SYSTEM**

(57) Disclosed in the present application are a routing combiner, a routing wave combining method, a wavelength division routing method, and a network system. The routing combiner is used for a wavelength division multiplexing system, and comprises a network side port and a plurality of device side ports; the routing combiner is configured to perform wave combining on multiple paths of optical signals input to the plurality of device side ports, and output same from the network side port, and to perform wavelength routing on an optical signal input to the network side port to form multiple paths of optical signals in which each path only comprises one wavelength, and output each path of optical signals by means of one of the plurality of device side ports.

device-side port <u>32</u>

routing multiplexer

network-side port <u>31</u>

Fig. 3

EP 3 902 167 A1

## Description

The present disclosure claims the priority to the Chinese Patent Application No. 201811591169.3 field with the CNIPA on December 20, 2018, the entire contents of which are incorporated herein by reference.

## TECHNICAL FIELD

The embodiments of the present disclosure relate to a routing multiplexer, a routing multiplexing method, a wavelength division routing method and a network system.

## BACKGROUND

With the development of wired and wireless communication technologies, the passive wavelength division multiplexing technology has been widely applied to the access field of Fiber To The X (FTTX) and the 4th Generation (4G)&5th Generation (5G) fronthaul field. However, limited by the characteristics of existing passive optical devices and optical network systems, wavelength channels cannot be flexibly created between network equipment at a terminal side and network equipment at a central office side, which makes it difficult to realize redundancy protection and load sharing for upper-layer services and pooling of central office system.

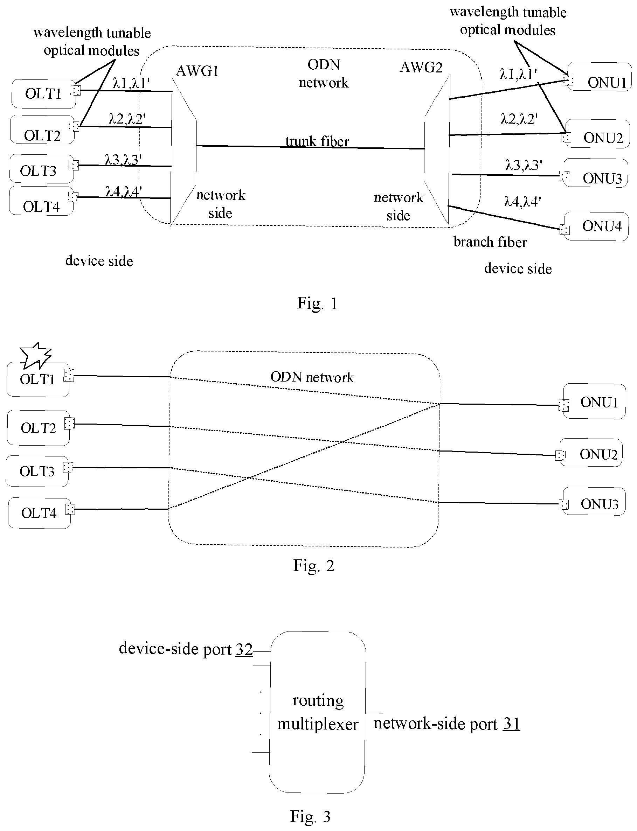

In an embodiment, as shown in Fig. 1, a Wavelength Division Multiplexing-Passive Optical Network (WDM-PON) generally adopts an Arrayed Waveguide Grating (AWG) for networking. Although Optical Line Terminals (OLTs) and Optical Network Units (ONUs) adopt wavelength tunable optical modules (with tunable emission wavelength and broad-spectrum reception), a device-side port of the AWG can only receive a specific wavelength, and an optical signal can be received only when the wavelength tunable optical module of the OLT or ONU connected to a device-side port of the AWG is tuned to a specific emission wavelength. Therefore, in the WDM-PON, only the OLT and the ONU connected to a fixed pair of ports at both ends can create a wavelength connection channel therebetween, which causes inconvenience to use. Similarly, in a passive WDM wireless fronthaul system, a color light module or a wavelength tunable optical module adopts a passive WDM device to multiplex multiple wavelengths to a trunk fiber or demultiplex multiple wavelengths from the trunk fiber, so as to effectively save fronthaul fiber resources. In a passive WDM system, since the device-side passive WDM devices at two ends have fixed port connection relationships, a wavelength connection channel between an optical module at the side of a Building Baseband Unit (BBU) or Distribution Unit (DU) and an optical module at the side of a Remote Radio Unit (RRU) or Active Antenna Unit (AAU) can be created only according to a fixed connection relationship, which causes inconvenience to deployment, and operation and maintenance.

## SUMMARY

At least one embodiment of the present disclosure provides a routing multiplexer, a routing multiplexing method, a wavelength division routing method, and a network system, which implement flexible connection between a central office side and a terminal.

At least one embodiment of the present disclosure provides a routing multiplexer for a wavelength division multiplexing system, and the routing multiplexer includes a network-side port and a plurality of device-side ports.

The routing multiplexer is configured to multiplex a plurality of optical signals input to the plurality of device-side ports and output the multiplexed optical signal from the network-side port, where each optical signal input to each device-side port is an optical signal of any one or more wavelengths of the plurality of optical signals.

The routing multiplexer is configured to perform wavelength routing on an optical signal input to the network-side port to obtain a plurality of optical signals each of which only includes one wavelength, and output each optical signal of the plurality of optical signals through one of the plurality of device-side ports.

At least one embodiment of the present disclosure provides a network system, including a first routing multiplexer according to any one of the embodiments, and a second routing multiplexer according to any one of the embodiments, where the network-side port of the first routing multiplexer is connected with the network-side port of the second routing multiplexer.

An embodiment of the present disclosure provides a network system, including a first routing multiplexer according to any one of the embodiments, a second routing multiplexer according to any one of the embodiments, and an optical amplification module, where: the network-side port of the first routing multiplexer is connected with one end of the optical amplification module, the other end of the optical amplification module is connected with the network-side port of the second routing multiplexer, and the optical amplification module is configured to amplify an optical signal from the first routing multiplexer and then input the amplified optical signal to the second routing multiplexer, and amplify an optical signal from the first routing multiplexer and then input the amplified optical signal to the second routing multiplexer.

At least one embodiment of the present disclosure provides a routing multiplexing method, including: multiplexing a plurality of optical signals input to a device-side port of a routing multiplexer and outputting the multiplexed optical signals from a network-side port of the routing multiplexer; and routing the optical signal input to the network-side port into a plurality of optical signals each including only an optical signal of one wavelength, and outputting the plurality of optical signals through the device-side port, respectively.

At least one embodiment of the present disclosure provides a wavelength division routing method, which is applied to a network system according to any one of the embodiments, and the method includes: setting, by the central-office unit, the emission wavelength of the central-office unit to be the reception wavelength of the device-side port connected with the terminal unit to which the central-office unit needs to be connected; and setting, by the terminal unit, the emission wavelength of the terminal unit to be the reception wavelength of the device-side port connected with the central-office unit to which the terminal unit needs to be connected.

## BRIEF DESCRIPTION OF THE DRAWINGS

Fig. 1 is a schematic diagram illustrating networking of a WDM-PON in the existing art;
Fig. 2 is a schematic diagram of a scenario of redundant backup, load sharing and system pooling in the existing art;
Fig. 3 is a block diagram of a routing multiplexer according to an implementation of the present disclosure;
Fig. 4 is a schematic diagram illustrating multiplexing of the routing multiplexer shown in Fig. 3;
Fig. 5 is a schematic diagram illustrating demultiplexing of the routing multiplexer shown in Fig. 3;
Fig. 6 is a schematic diagram illustrating an implementation mode of a routing multiplexer according to an implementation of the present disclosure;
Fig. 7 is a schematic diagram illustrating a wavelength routing principle of the routing multiplexer shown in Fig. 6;
Fig. 8 is a schematic diagram illustrating a multiplexing principle of the routing multiplexer shown in Fig. 6;
Fig. 9 is a schematic diagram illustrating another implementation mode of a routing multiplexer according to an implementation of the present disclosure;
Fig. 10 is a schematic diagram illustrating a wavelength routing principle of the routing multiplexer shown in Fig. 9;
Fig. 11 is a schematic diagram illustrating a multiplexing principle of the routing multiplexer shown in Fig. 9;
Fig. 12 is a schematic diagram illustrating still another implementation mode of a routing multiplexer according to an implementation of the present disclosure;
Fig. 13 is a schematic diagram illustrating a wavelength routing principle of the routing multiplexer shown in Fig. 12;
Fig. 14 is a schematic diagram illustrating a multiplexing principle of the routing multiplexer shown in Fig. 12;
Fig. 15 is a schematic diagram illustrating an implementation mode of a wavelength selective combining and dividing device;
Fig. 16 is a schematic diagram of an output spectrum of a wavelength selective combining and dividing device;
Fig. 17a is a schematic diagram of output spectra of Ports 3 of a $1^{st}$-stage to a $3^{rd}$-stage wavelength selective combining and dividing devices in an optical splitting network having a splitting ratio of 1:8;
Fig. 17b is a schematic diagram of output spectra of Ports 4 of a $1^{st}$-stage to a $3^{rd}$-stage wavelength selective combining and dividing devices in an optical splitting network having a splitting ratio of 1:8;
Fig. 18 is a flowchart illustrating a routing multiplexing method according to an implementation of the present disclosure;
Figs. 19a to 19e are schematic diagrams of a network system according to implementations of the present disclosure;
Fig. 20 is a schematic diagram of a WDM network according to an implementation of the present disclosure;
Fig. 21a is a schematic diagram of a redundant backup system according to an implementation of the present disclosure;
Fig. 21b is a flowchart illustrating a redundant backup method of the system shown in Fig. 21a;
Fig. 22a is a schematic diagram of a redundant backup system according to another implementation of the present disclosure;
Fig. 22b is a flowchart illustrating a redundant backup method of the system shown in Fig. 22a;
Fig. 23a is a schematic diagram of an Optical Distribution Network (ODN) directly connected to OLTs or ONUs according to an implementation of the present disclosure;
Fig. 23b is a flowchart illustrating a wavelength division routing method of the network shown in Fig. 23a;
Fig. 24a is a schematic diagram of an ODN directly connected to service devices according to an embodiment of the present disclosure;
Fig. 24b is a flowchart illustrating a wavelength division routing method of the network shown in Fig. 24a; and
Fig. 25 is a flowchart illustrating a wavelength division routing method according to an implementation of the present disclosure.

## DETAILED DESCRIPTION

The embodiments of the present disclosure will be described below with reference to the accompanying drawings. The embodiments and the features thereof in the present disclosure can be arbitrarily combined with one another if no conflict is incurred.

The steps illustrated in the flowcharts of the drawings may be performed in a computer system such as a set of computer-executable instructions. In addition, although a logical order is illustrated in the flowchart, the steps illustrated or described may be performed in an order different from that described herein in some cases.

As shown in Fig. 2, in a scenario of redundant backup, load sharing and system pooling, an N+1 redundancy is adopted at the side of OLTs. At the beginning, OLTs and ONUs perform communication in pairs, with one OLT kept idle. When an OLT in operation is overloaded or breaks down, one ONU needs to be reconnected to the idle OLT. That is, the capability to reconfigure according to wavelengths of OLTs and ONUs to create a wavelength connection channel between any OLT and any ONU in an ODN is required. Apparently the WDM-PON system in the existing art does not have such capability.

An embodiment of the present disclosure provides an optical device (hereinafter referred to as a routing multiplexer) for a WDM system. For a plurality of uplink optical signals and a plurality of downlink optical signals of the WDM system, the routing multiplexer has the functions of unidirectional multiplexing of optical signals and unidirectional wavelength routing of optical signals. For example, the routing multiplexer can perform multiplexing on the plurality of downlink optical signals and perform wavelength routing on the plurality of uplink optical signals, or perform multiplexing on the plurality of uplink optical signals and perform wavelength routing on the plurality of downlink optical signals. One side of the routing multiplexer is referred to as a device side, the other side of the routing multiplexer is referred to as a network side. A plurality of optical ports (referred to as device-side ports) are disposed at the device side and are connected to a plurality of devices through single fibers, and one or more optical ports (referred to as network-side ports) are disposed at the network side and are connected to a trunk fiber. In an embodiment, along a direction from the device side to the network side, the routing multiplexer can perform multiplexing on optical signals from multiple branch fibers at the device side and output a multiplexed optical signal from a trunk fiber at the network side, and the optical signal from each branch fiber may include an optical signal having at least one WDM wavelength among optical signals in multiple WDM wavelengths; and along a direction from the network side to the device side, the routing multiplexer performs wavelength routing on a mixed optical signal having multiple WDM wavelengths from the trunk fiber, and outputs obtained optical signals to the branch fibers respectively through different device-side ports, and each branch fiber is only allocated an optical signal in one wavelength among the optical signals with multiple wavelengths (that is, each device-side port allows output of signals in one wavelength). In a WDM PON system, for a routing multiplexer located at the side of OLTs, an optical signal transmitted from the device side to the network side is a downlink optical signal, and an optical signal transmitted from the network side to the device side is an uplink optical signal; and for a routing multiplexer located at the side of ONUs, an optical signal transmitted from the device side to the network side is an uplink optical signal, and an optical signal transmitted from the network side to the device side is a downlink optical signal.

The optical signals with multiple wavelengths are optical signals with multiple wavelengths in one multiplexing cycle of the routing multiplexer. When the trunk fiber transmits optical signals with multiple wavelengths in N multiplexing cycles of the routing multiplexer, each branch fiber can be allocated optical signals in corresponding wavelengths in the N different multiplexing cycles along the direction from the network side to the device side, so that wavelengths of output optical signals may be different in the different multiplexing cycles. Along the direction from the device side to the network side, the routing multiplexer can perform multiplexing on the optical signals from the multiple branch fibers at the device side and output the multiplexed optical signal from the trunk fiber at the network side, and the optical signal from each branch fiber may include an optical signal having at least one wavelength among the optical signals with multiple wavelengths in the N multiplexing cycles of the routing multiplexer.

As shown in Fig. 3, the routing multiplexer includes a network-side port 31 and a plurality of device-side ports 32. The routing multiplexer is configured to perform multiplexing on multiple WDM optical signals input to the plurality of device-side ports 32 and output a multiplexed optical signal from the network-side port 31, and each optical signal input to each device-side port 32 is an optical signal in any one or more wavelengths among the multiple optical signals; and the routing multiplexer is further configured to perform wavelength routing on a WDM optical signal input to the network-side port 31 to obtain multiple optical signals each having only one wavelength, and output each optical signal through one of the plurality of device-side ports 32. For the multiple WDM optical signals input through the plurality of device-side ports 32, if a corresponding relationship between the wavelengths and the device-side ports 32 is arbitrarily changed and the number of the wavelengths input to any device-side port 32 is changed, the multiplexing capability of the routing multiplexer will not be changed, that is, the routing multiplexer can still output the multiple WDM optical signals from the network-side port 31. One or more network-side ports 31 may be provided. In the case where a plurality of network-side ports 31 are provided, each network-side port 31 serves as a backup for another.

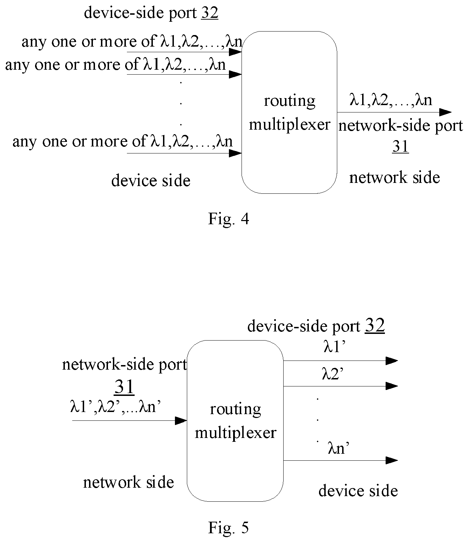

In an embodiment, in a WDM system, downlink WDM optical signals have wavelengths λ1, λ2, ..., and λn, and uplink WDM optical signals have wavelengths λ1', λ2', ..., and λn'. As shown in Fig. 4, the routing multiplexer includes n device-side ports and one network-side port, and n downlink optical signals are input to the n device-side ports respectively, each of the n downlink optical signals includes an optical signal in any one or more of wavelengths λ1, λ2, ..., and λn, and the routing multiplexer performs multiplexing on the n downlink optical signals to obtain a mixed optical signal having wavelengths λ1, λ2, ..., and λn, and outputs the mixed optical signal from the network-side port 31. The routing multiplexer can be applied at a central office side (OLT, BBU or DU).

As shown in Fig. 5, after a mixed uplink optical signal having n wavelengths λ1', λ2', ..., and λn' is received through the network-side port of the routing multiplexer, the routing multiplexer performs wavelength routing on the mixed uplink optical signal to obtain n optical signals, the wavelengths of which are λ1', λ2', ..., and λn' respectively, and the n optical signals are output from the fixed n device-side ports respectively. The routing multiplexer can be applied at a terminal side (ONU, RRU or AAU).

Compared with the AWG in the existing art whose device-side port can only receive a specific wavelength, the routing multiplexer provided by the embodiment has the functions of unidirectional multiplexing of optical signals and unidirectional wavelength routing of optical signals, and can perform multiplexing on a plurality of downlink optical signals and perform wavelength routing on a plurality of uplink optical signals; moreover, no limitation is imposed on the wavelengths received by the device-side ports, so when a tunable optical module at an OLT (BBU) port or an ONU (RRU) port is connected, the emission wavelength of the OLT (BBU) port or the ONU (RRU) port can be adjusted to a reception wavelength of a port at an opposite end, which enables establishment of a connection between any OLT (BBU) port and any ONU (RRU) port, thereby supporting the redundant backup. An optical module at a port at an opposite end receives WDM optical signals in only one wavelength due to the wavelength routing function of the routing multiplexer at the opposite end, so that the optical module can just adopt a wideband receiver, with no need for an adjustable receiver.

Compared with the existing art, the routing multiplexer provided by at least one embodiment of the present disclosure can perform multiplexing on the multiple WDM optical signals input to the device-side ports and output the multiplexed optical signal from the network-side port, and can also perform demultiplexing on the mixed WDM optical signal having multiple wavelengths input to the network-side port to obtain multiple optical signals each having only one wavelength, and output each optical signal through one device-side port. The technical solution provided by the embodiment achieves unidirectional multiplexing and unidirectional wavelength routing.

In an embodiment, outputting each wavelength division multiplexing optical signal through one device-side port includes outputting each wavelength division multiplexing optical signal through a fixed device-side port corresponding to a wavelength of the wavelength division multiplexing optical signal.

The routing multiplexer is further illustrated below by the embodiments.

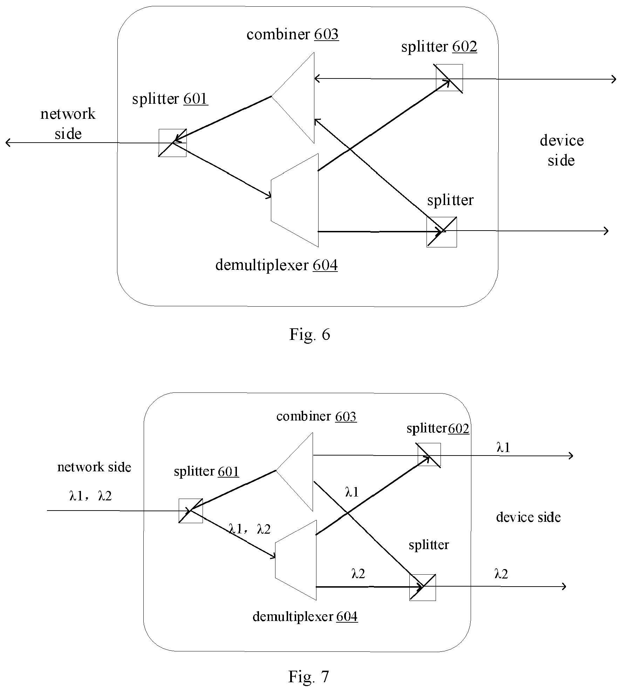

As shown in Fig. 6, an implementation provides a routing multiplexer for a WDM system, including a splitter 601 connected to the network-side port, splitters 602 connected to the device-side ports, a combiner 603 and a demultiplexer 604. The splitter 601 and the network-side port is disposed in one to one correspondence, the splitters 602 and the device-side ports are disposed in one to one correspondence, that is, each port of the routing multiplexer is provided with one splitter configured to achieve multiplexing and demultiplexing of uplink and downlink WDM optical signals for the port. The splitter 601 is configured to perform multiplexing and demultiplexing on multiple WDM optical signals after the multiple WDM optical signals are multiplexed or before the multiple WDM optical signals are routed, and the splitter 601 and the splitters 602 may be made from at least one of common multiplexing and demultiplexing devices (such as at least one of a thin-film filter, a fiber Bragg grating, a multimode interference coupler and a directional coupler) and loop devices. The combiner 603 includes a plurality of input ports (the number of which is the same as that of the device-side ports) and one output port, is configured to couple multiple WDM optical signals, which are in any wavelength and input from any input port, together and output a coupled optical signal from the output port, and may be implemented by a common power divider having a wavelength-independent characteristic (such as at least one of a fused fiber splitter, a planar waveguide splitter and a star coupler). The demultiplexer 604 includes one input port and a plurality of output ports, is configured to route a mixed WDM optical signal having multiple wavelengths from the input port according to wavelengths and output optical signals differing in wavelength through different output ports, and may be implemented by a common multi-port wavelength division multiplexing device (such as at least one of a multi-channel thin-film filter, an arrayed waveguide grating, an etched diffraction grating, a cascaded micro-ring resonator and a cascaded Mach-Zehnder interferometer). The plurality of input ports of the combiner 603 are respectively connected to the splitters 602 connected to the device-side ports, and the output port of the combiner 603 is connected to the splitter 601 connected to the network-side port. The input port of the demultiplexer 604 is connected to the splitter 601 connected to the network-side port, and the plurality of output ports of the demultiplexer 604 are respectively connected to the splitters 602 connected to the device-side ports.

The splitter 601 connected to the network-side port is configured to guide a WDM optical signal from the network-side port to the demultiplexer 604 and guide a multiplexed mixed WDM optical signal from the combiner 603 to the network-side port for output.

The splitter 602 connected to the device-side port is configured to guide a WDM optical signal from the demultiplexer 604 to the device-side port for output and guide a WDM optical signal from the device-side port to the combiner 603.

The combiner 603 is configured to couple WDM optical signals input from the input ports thereof together and output a coupled optical signal from the output port thereof to the splitter 601 connected to the network-side port.

The demultiplexer 604 is configured to route a mixed WDM optical signal having multiple wavelengths from the input port thereof according to wavelengths and respectively output obtained optical signals from the output ports thereof to the splitters 602 connected to the device-side ports.

In an embodiment, Fig. 6 shows only two splitters connected to the device-side ports; and in the case where n device-side ports are provided, n splitters are connected to the device-side ports correspondingly.

A wavelength routing principle of the routing multiplexer shown in Fig. 6 is illustrated by Fig. 7: in the embodiment, assuming that the routing multiplexer is provided with two device-side ports, two splitters are connected to the device-side ports correspondingly. A mixed optical signal having a wavelength λ1 and a wavelength λ2 from the trunk fiber at the network side is subjected to signal separation by the splitter 601, the optical signals obtained by the separation are guided to the demultiplexer 604, the demultiplexer 604 performs wavelength routing to guide optical signals in different wavelengths to the splitters 602 connected to different device-side ports, and the splitters 602 guide the optical signals to the connected branch fibers for output. Thus, the wavelength routing function from the network side to the device side is successfully realized.

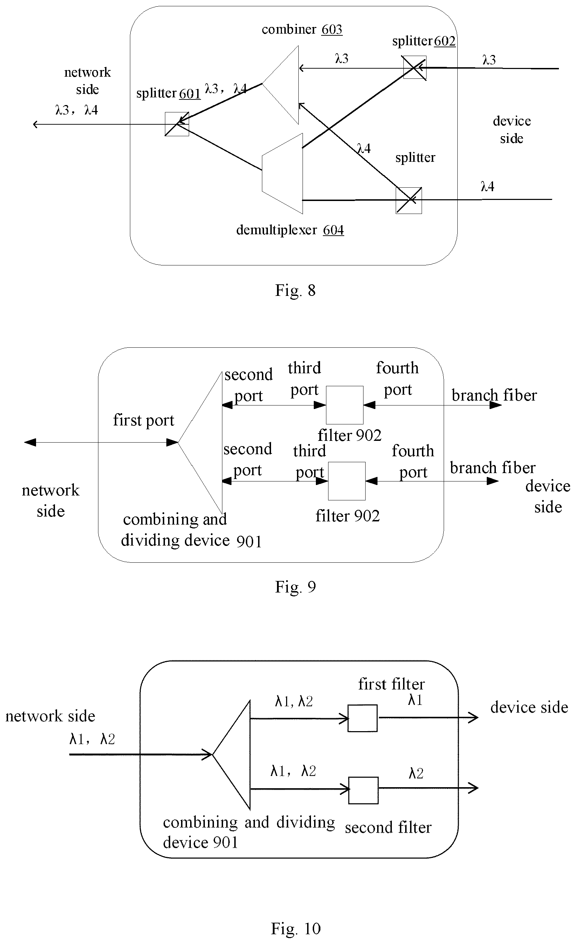

A multiplexing principle of the routing multiplexer shown in Fig. 6 is illustrated by Fig. 8: in the embodiment, assuming that the routing multiplexer is provided with two device-side ports, two splitters are connected to the device-side ports correspondingly. Two optical signals which have a wavelength λ3 and a wavelength λ4 respectively and are input from the branch fibers at the device side are guided by respective splitters 602 connected to the device-side ports to the combiner 603, the combiner 603 performs multiplexing on the two optical signals and outputs a multiplexed optical signal to the splitter 601 connected to the network-side port, and the multiplexed optical signal (including an optical signal having the wavelength λ3 and an optical signal having the wavelength λ4) is transparently transmitted by the splitter 601 connected to the network-side port and is output from the trunk fiber. Thus, the multiplexing function from the device side to the network side is realized.

In Fig. 8, if the two optical signals which have the wavelength λ3 and the wavelength λ4 respectively and are input from the branch fibers are input in such a way that the branch fibers are interchanged and the input ports are interchanged, or the two optical signals are input from any port of the two branch fibers at the same time, the combiner can realize the multiplexing function of the optical signals input from the branch fibers. That is, the multiplexing function of the combiner is irrelevant to the wavelength values of the optical signals input from the branch fibers.

In the embodiment, the routing multiplexer may be implemented by packaging the above optical devices in one module through spatial light coupling, or by integrating the above optical devices into one optical chip through the photonic integration technology.

In the embodiment, λ1, λ2, λ3 and λ4 are merely examples for the illustration of the functions. In applications, an ODN may include two or more pairs of bidirectional wavelengths, for example, when the combiner and the demultiplexer have a splitting ratio of 1:32, bidirectional allocation of 64 (32 pairs) of wavelengths can be supported.

In the embodiment, in the case where the demultiplexer is a periodic wavelength division multiplexing device such as an arrayed waveguide grating, an etched diffraction grating or a cascaded micro-ring resonator, when the wavelength routing is performed from the trunk fiber at the network side to the branch fibers at the device side as shown in Fig. 7, if the optical signals input from the trunk fiber include signals with multiple wavelengths in a plurality of multiplexing cycles of the demultiplexer, for example, optical signals with wavelengths λ1, λ2, λ5 and λ6 in two multiplexing cycles are input from the trunk fiber, with a wavelength range from λ1 to λ5 being one multiplexing cycle of the demultiplexer (a wavelength range from λ2 to λ6 is the same as that from λ1 to λ5), the optical signals in λ1 and λ5 and the optical signals in λ2 and λ6 are output from the branch fibers at the device side in the two multiplexing cycles respectively.

Fig. 9 shows a routing multiplexer provided by another implementation of the present disclosure. The routing multiplexer includes a combining and dividing device 901 and a plurality of filters 902. The combining and dividing device 901 includes a first port and at least one second port, the filter 902 includes a third port and a fourth port and is disposed in one to one correspondence with the device-side port and the second port, that is, each device-side port corresponds to one filter 902 and each second port corresponds to one filter 902, the number of the filters is the same as that of the device-side ports, and the number of the second ports is the same as that of the device-side ports. The first port of the combining and dividing device 901 is connected to the network-side port, the second port of the combining and dividing device 901 is connected to the third port of a corresponding filter 902, and the fourth port of the filter 902 is connected to a corresponding device-side port.

The combining and dividing device 901 is configured to perform multiplexing on multiple WDM optical signals from the filters 902 and output a multiplexed optical signal to the network-side port, and divide a mixed WDM optical signal having multiple wavelengths from the network-side port and guide obtained optical signals to all the filters 902. Thus, together with the filtering function of the filters 902, the multiple optical signals which are input from any branch fiber and have any wavelength can be coupled together and output to the trunk fiber through the network-side port, and the mixed optical signal having multiple wavelengths input from the trunk fiber at the network side can be divided and output from the branch fibers through the corresponding device-side ports.

The combining and dividing device 901 may be implemented by a common power divider having a wavelength-independent characteristic (such as at least one of a fused fiber splitter and a planar waveguide splitter).

The filter 902 is configured to extract an optical signal having a wavelength corresponding to the device-side port connected to the filter from the mixed WDM optical signal having multiple wavelengths input from the combining and dividing device 901, and output the extracted optical signal through the connected device-side port, and transmit and input an optical signal from the connected device-side port to the combining and dividing device 901. For a WDM system where downlink WDM optical signals have wavelengths $\lambda 1$, $\lambda 2$, ..., and $\lambda n$, uplink WDM optical signals have wavelengths $\lambda 1'$, $\lambda 2'$, ..., and $\lambda n'$, a transmission direction from the network side to the device side is a downlink direction for the routing multiplexer, and a transmission direction from the device side to the network side is an uplink direction for the routing multiplexer, that is, the routing multiplexer is located at the terminal side (ONU, RRU or AAU), the filters 902 have the filtering characteristics that the filter 902 connected to the device-side port transmits a routing wavelength $\lambda x$ (one of $\lambda 1$, $\lambda 2$, ..., and $\lambda n$, and a value of x is related to the connected port) corresponding to the connected port, transmits any one of multiplexing wavelengths $\lambda 1'$, $\lambda 2'$, ..., and $\lambda n'$, and reflects and cuts off the routing wavelengths ($\lambda 1$, $\lambda 2$, ..., and $\lambda n$ other than $\lambda x$) which do not correspond to the connected port.

The filter 902 may be implemented by a wavelength division multiplexing device (such as at least one of a fiber Bragg grating, a micro-ring resonator and a multimode interference coupler).

A wavelength routing principle of the routing multiplexer shown in Fig. 9 is illustrated by Fig. 10: in the embodiment, assuming that two device-side ports are provided, two filters, namely a first filter and a second filter, are provided correspondingly. A mixed optical signal having a wavelength $\lambda 1$ and a wavelength $\lambda 2$ from the trunk fiber at the network side is divided by the combining and dividing device 901 into two optical signals each including a mixed optical signal having the wavelengths $\lambda 1$ and $\lambda 2$, and the two optical signals are input to the first filter and the second filter respectively, the first filter transmits the optical signal having the wavelength $\lambda 1$, the second filter transmits the optical signal having the wavelength $\lambda 2$, and two branch fibers at the device side output the optical signal having the wavelength $\lambda 1$ and the optical signal having the wavelength $\lambda 2$, respectively. Thus, the wavelength routing function from the network side to the device side is successfully realized.

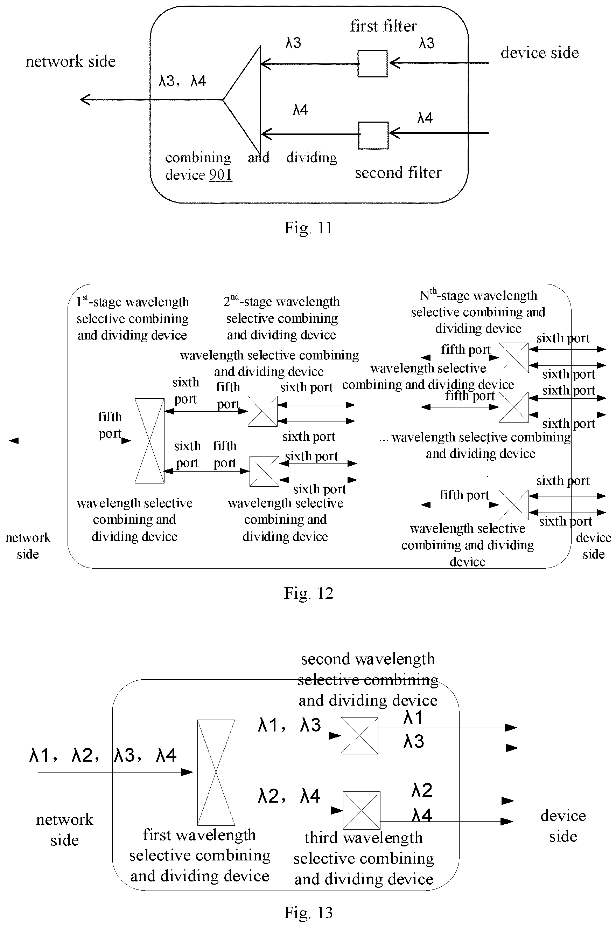

A multiplexing principle of the routing multiplexer shown in Fig. 9 is illustrated by Fig. 11. Two optical signals which have a wavelength $\lambda 3$ and a wavelength $\lambda 4$ respectively are input from the branch fibers at the device side, the optical signal having the wavelength $\lambda 3$ is transmitted to the combining and dividing device 901 through the first filter, the optical signal having the wavelength $\lambda 4$ is transmitted to the combining and dividing device 901 through the second filter, and the combining and dividing device 901 performs multiplexing on the two optical signals to obtain a mixed optical signal having the wavelengths $\lambda 3$ and $\lambda 4$, and outputs the mixed optical signal to the network-side port, thereby completing the multiplexing function from the device side to the network side. In Fig. 11, if the two optical signals which have the wavelength $\lambda 3$ and the wavelength $\lambda 4$ respectively and are input from the branch fibers are input in such a way that the branch fibers are interchanged and the input ports are interchanged, or the two optical signals are input from any port of the two branch fibers at the same time, the combining and dividing device 901 can realize the multiplexing function of the optical signals input from the branch fibers. That is, the multiplexing function of the combining and dividing device 901 is irrelevant to the wavelength values of the optical signals input from the branch fibers. The first filter and the second filter transmit both of the optical signals having the wavelengths $\lambda 3$ and $\lambda 4$ transmitted from the device side to the network side.

In the embodiment, the routing multiplexer may be implemented by packaging the above optical devices in one module through spatial light coupling, or by integrating the above optical devices into one optical chip through the photonic integration technology.

In the embodiment, $\lambda 1$, $\lambda 2$, $\lambda 3$ and $\lambda 4$ are merely examples for the illustration of the functions. In applications, an ODN may include two or more pairs of bidirectional wavelengths, for example, when the combining and dividing device has a splitting ratio of 1:32, bidirectional allocation of 64 (32 pairs) of wavelengths can be supported.

In the embodiment, in the case where the filter is a periodic wavelength selection device such as a micro-ring resonator, when the wavelength routing is performed from the trunk fiber at the network side to the branch fibers at the device side as shown in Fig. 10, if the optical signals input from the trunk fiber include signals with multiple wavelengths in a plurality of wavelength selection cycles, for example, optical signals with wavelengths $\lambda 1$, $\lambda 2$, $\lambda 5$ and $\lambda 6$ in two wavelength selection cycles are input from the trunk fiber, the first filter transmits both of the optical signals with the wavelengths $\lambda 1$ and $\lambda 5$, and the second filter transmits both of the optical signals with the wavelengths $\lambda 2$ and $\lambda 6$, so that the optical signals in $\lambda 1$ and $\lambda 5$ and the optical signals in $\lambda 2$ and $\lambda 6$ can be output from the branch fibers at the device side in the two wavelength selection cycles respectively.

Fig. 12 is a schematic diagram illustrating another implementation of the routing multiplexer. As shown in Fig. 12, the routing multiplexer includes a 1st-stage wavelength selective combining and dividing device to an Nth-stage

wavelength selective combining and dividing device disposed from the network-side port to the device-side ports, and each of the 1st-stage to the Nth-stage wavelength selective combining and dividing devices includes at least one wavelength selective combining and dividing device. Each wavelength selective combining and dividing device includes one fifth port and M (M>1) sixth ports (M=2 in Fig. 12, but M is not limited to 2 and may be in another value, such as 3 or 4). A total number of the sixth ports of the wavelength selective combining and dividing devices in the $i^{th}$ stage is equal to the number of the wavelength selective combining and dividing devices in the $(i+1)^{th}$ stage, each sixth port of each wavelength selective combining and dividing device in the $i^{th}$ stage is connected to one fifth port of the wavelength selective combining and dividing device in the $(i+1)^{th}$ stage, where i =1, ..., N-1 and N>1, that is, the sixth ports of the wavelength selective combining and dividing devices in the $i^{th}$ stage are disposed in one to one correspondence with the wavelength selective combining and dividing devices in the $(i+1)^{th}$ stage. Each sixth port of the wavelength selective combining and dividing devices in the $N^{th}$ stage is connected to one device-side port, and the fifth port of the wavelength selective combining and dividing device in the 1st stage is connected to the network-side port.

The wavelength selective combining and dividing device is configured to couple all optical signals input to the sixth ports thereof together and output a coupled optical signal from the fifth port thereof, and divide a mixed optical signal having multiple wavelengths input to the fifth port thereof into M groups and output the M groups through the M sixth ports thereof respectively.

In an embodiment, the 1st-stage wavelength selective combining and dividing device divides a mixed optical signal having multiple wavelengths input to the fifth port thereof into M groups, and inputs the M groups to the M wavelength selective combining and dividing devices in the 2nd stage respectively (one group of optical signals is input to one wavelength selective combining and dividing device in the 2nd stage), and each wavelength selective combining and dividing device in the 2nd stage divides a mixed optical signal having multiple wavelengths input to the fifth port thereof into M groups, and inputs the M groups to the M wavelength selective combining and dividing devices in the 3rd stage respectively, and so on, and each wavelength selective combining and dividing device in the $N^{th}$ stage divides a mixed optical signal having multiple wavelengths input to the fifth port thereof into M groups, and inputs the M groups through corresponding device-side ports.

Taking M=2 as an example, the 1st-stage wavelength selective combining and dividing device includes one wavelength selective combining and dividing device, the 2nd-stage wavelength selective combining and dividing device includes two wavelength selective combining and dividing devices, the 3rd-stage wavelength selective combining and dividing device includes four wavelength selective combining and dividing devices, the $i^{th}$-stage wavelength selective combining and dividing device includes $2^{i-1}$ wavelength selective combining and dividing devices, and so on, and the $N^{th}$-stage wavelength selective combining and dividing device includes $2^{N-1}$ wavelength selective combining and dividing devices.

The wavelength selective combining and dividing device is implemented by at least one of a directional coupler, a Mach-Zehnder interferometer and an etalon, that is, the wavelength selective combining and dividing device can be implemented by one of a directional coupler, a Mach-Zehnder interferometer and an etalon or a combination thereof, and a plurality of wavelength selective combining and dividing devices may be the same as or different from one another. In the case where a splitting ratio is $1:2^N$, it is required to cascade N stages of wavelength selective combining and dividing devices, and the $N^{th}$-stage wavelength selective combining and dividing device group includes $2^{N-1}$ wavelength selective combining and dividing devices.

In an embodiment, dividing the mixed optical signal having multiple wavelengths input to the fifth port of the wavelength selective combining and dividing device into M groups includes dividing the optical signal, which is input to the fifth port of the wavelength selective combining and dividing device and has multiple wavelengths evenly spaced at a first interval, into a first group and a second group, the first group and the second group are the same in the number of optical signals, each of the first group and the second group includes an optical signal having multiple wavelengths evenly spaced at a second interval, and the second interval is twice the first interval.

In others embodiments, the wavelength selective combining and dividing devices in the multiple stages may be different from one another, for example, being different in the number of the sixth ports, etc.

The following description is given by taking an example that the routing multiplexer has a splitting ratio of 1:4 and includes two stages of wavelength selective combining and dividing devices and each wavelength selective combining and dividing device includes two sixth ports. The 1st-stage wavelength selective combining and dividing device includes a first wavelength selective combining and dividing device, and the 2nd-stage wavelength selective combining and dividing device includes a second wavelength selective combining and dividing device and a third wavelength selective combining and dividing device.

A wavelength routing principle is illustrated by Fig. 13. A mixed optical signal having wavelengths λ1, λ2, λ3 and λ4 from the trunk fiber at the network side is divided into two optical signals by the first wavelength selective combining and dividing device, with one including optical signals having the wavelengths λ1 and λ3, and the other one including optical signals having the wavelengths λ2 and λ4; the optical signals having the wavelengths λ1 and λ3 are input to the second wavelength selective combining and dividing device, and are divided by the second wavelength selective combining and dividing device into two optical signals which have the wavelengths λ1 and λ3 respectively, and the two branch fibers at the device side output the optical signals having the wavelengths λ1 and λ3 respectively; and the optical signals having the wavelengths λ2 and λ4 are input to the third wavelength selective combining and dividing device, and are divided by the third wavelength selective combining and dividing device into two optical signals which have the wavelengths λ2 and λ4 respectively, and the two branch fibers at the device side output the optical signals having the wavelengths λ2 and λ4 respectively, thereby successfully realizing the wavelength routing function from the network side to the device side.

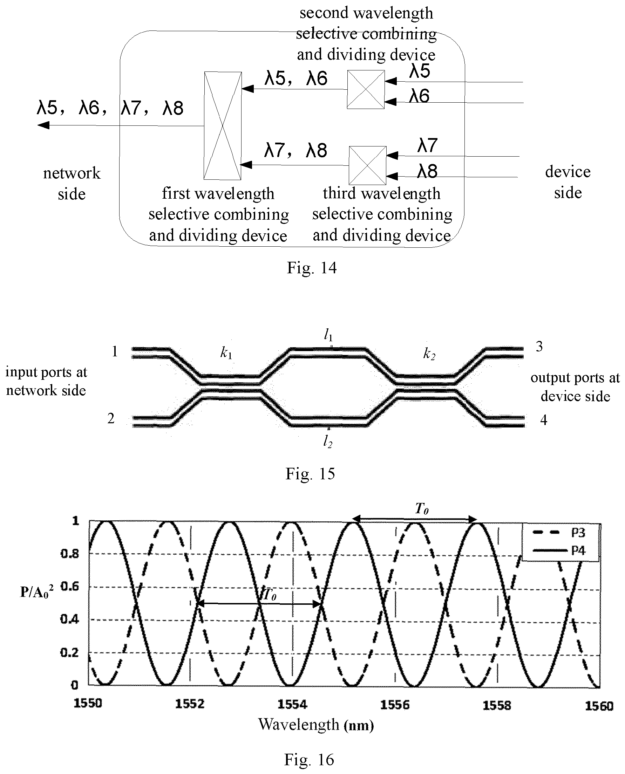

A multiplexing principle is illustrated by Fig. 14. An optical signal having a wavelength λ5 and an optical signal having a wavelength λ6 from the branch fibers at the device side are multiplexed by the second wavelength selective combining and dividing device and then input to the first wavelength selective combining and dividing device, optical signals having wavelengths λ7 and λ8 respectively from the branch fibers at the device side are multiplexed by the third wavelength selective combining and dividing device and then input to the first wavelength selective combining and dividing device, and the first wavelength selective combining and dividing device performs multiplexing on the above optical signals having the four wavelengths and outputs a multiplexed optical signal to the network-side port, thereby realizing the multiplexing function from the device side to the network side. In Fig. 14, if the optical signals which have the four wavelengths λ5, λ6, λ7 and λ8 and are input from the branch fibers at the device side are input in such a way that the branch fibers are interchanged and the input ports are interchanged, or the optical signals are input from any port of the four branch fibers at the same time, the routing multiplexer can realize the multiplexing function of the optical signals input from the branch fibers. That is, the multiplexing function of the routing multiplexer is irrelevant to the wavelength values of the optical signals input from the branch fibers.

For realizing the above wavelength routing and multiplexing functions, the wavelength selective combining and dividing devices in the routing multiplexer meet the following requirements: for a routing multiplexer with a splitting ratio of 1:2N, the routing multiplexer is formed by cascading N stages of wavelength selective combining and dividing devices, and the $N^{th}$-stage wavelength selective combining and dividing device group includes $2^{N-1}$ wavelength selective combining and dividing devices; when the wavelength routing function is implemented, each wavelength selective combining and dividing device arranges a plurality of evenly spaced input wavelengths in an order, assigns identifiers to the ordered wavelengths, with the wavelength having a minimum or maximum wavelength value assigned an initial identifier of Wavelength 1, and divides the wavelengths into an odd wavelength (having odd identifiers) group and an even wavelength (having even identifiers) group according to the identifiers of the wavelengths. The odd wavelength group is output from one port of the wavelength selective combining and dividing device with a minimum loss value, and the even wavelength group is output from the other port of the wavelength selective combining and dividing device with the minimum loss value; and when the multiplexing function is implemented, for a group of wavelengths input from the device side, no matter through which one of the two device-side ports any wavelength in the group of wavelengths is input, the loss value of each wavelength selective combining and dividing device is basically the same (approximating to a splitting ratio of 1:1, i.e., 3dB).

As shown in Fig. 15, an implementation of the wavelength selective combining and dividing device is a Mach-Zehnder interferometer, including two directional couplers which have coupling coefficients $k_1$ and $k_2$ respectively, and interference arms which have lengths $l_1$ and $l_2$ respectively. Port 1 is the fifth port of the wavelength selective combining and dividing device, and Port 3 and Port 4 are the sixth ports of the wavelength selective combining and dividing device. When an optical signal is only input from the Port 1, and $k_1=k_2=1/2$, the light intensities of the optical signals output from the Port 3 and the Port 4 of the Mach-Zehnder interferometer are respectively:

$$P_3 = A_0^2 \sin^2\left(\beta\left(\frac{l_2-l_1}{2}\right)\right), \quad P_4 = A_0^2 \cos^2\left(\beta\left(\frac{l_2-l_1}{2}\right)\right)$$

In the above formulae, Ao is the light amplitude of the input signal input from the Port 1, β is a light propagation

constant, $\beta = \dfrac{2\pi * n_e}{\lambda}$, $n_e$ is an effective refractive index of a waveguide of the wavelength selective combining and dividing device, and λ is the wavelength of the input optical signal. Changes of the spectral characteristics of P3 and P4 with a wavelength λ can be obtained according to the above formula, as shown in Fig. 16, the changes are the same in period and are opposite in trend, and a maximum value of optical power of P3 corresponds to a minimum value of optical power of P4. When the wavelength selective combining and dividing device performs wavelength routing function from the network side, the evenly spaced wavelength values corresponding to the maximum optical power on the spectral curves of P3 and P4 are selected as the wavelengths of input optical signals, and form an odd wavelength group and an even wavelength group of the wavelength selective combining and dividing device, and the two wavelength groups are then output from corresponding ports respectively. When the wavelength selective combining and dividing device performs the multiplexing function from the network side, the wavelength values corresponding to P3=P4 on the spectrum curves are selected as the wavelengths of the optical signals input from the device-side ports.

When the function of the routing multiplexer illustrated by Fig. 12 is implemented, assuming that a wavelength interval corresponding to a minimum optical power change period of the 1st-stage wavelength selective combining and dividing device is To (as shown in Fig. 16), and a wavelength interval corresponding to a minimum optical power change period of the ith-stage wavelength selective combining and dividing device is Ti, To and Ti should satisfy the following relationships:

for the 1st stage, i=1 and $T_1 = k \cdot T_0$, where k is a positive integer;

for the 2nd stage, i =2 and $T_2 = k \cdot T_0 /(m_2 + \frac{1}{2})$ , where k and m2 are both positive integers;

for the 3rd stage, i =3 and $T_3 = 2k \cdot T_0 /(m_3 + \frac{1}{2})$ , where k and m3 are both positive integers;

for the ith stage, $T_i = 2^{i-2} k \cdot T_0 /(m_i + \frac{1}{2}) = \frac{2^{i-1} k}{2m_i + 1} \cdot T_0$ , where k and mi are both positive integers;

for the Nth stage, i =N and $T_i = 2^{N-2} k \cdot T_0 /(m_N + \frac{1}{2}) = \frac{2^{N-1} k}{2m_N + 1} \cdot T_0$ , where k and mi are both positive integers.

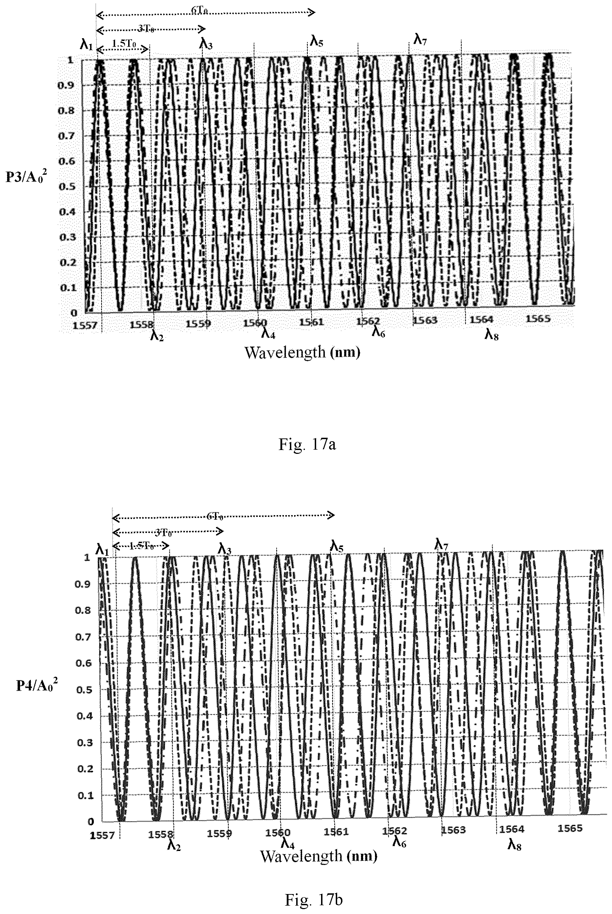

In the above formulae, k and mi can be any positive integers. For example, for a 1:8 WDM PON distribution network, N=3, when k=3, $T_1=3T_0$; $T_2=6T_0/7$, $m_2=3$; $T_3=12T_0/15$, $m_3=7$. The spectral transmission characteristics as shown in Figs. 17a and 17b can be obtained.

In Fig. 17a/Fig. 17b, a solid line, a dashed line and a dotted line represent an output spectrum of the Port 3/the Port 4 of the 1st-stage wavelength selective combining and dividing device, the Port 3/the Port 4 of the 2nd-stage wavelength selective combining and dividing device, and the Port 3/the Port 4 of the 3rd-stage wavelength selective combining and dividing device respectively, and a wavelength interval of input wavelengths selected by each stage of wavelength selective combining and dividing device is $2^{i-2} k \cdot T_0$. As shown in Figs. 17a and 17b, after eight wavelengths λ1, λ2, ..., and λ8 with a wavelength interval of 1.5To are transmitted by the 1st-stage wavelength selective combining and dividing device, an odd wavelength group of λ1, λ3, λ5 and λ7 have the least loss on the transmission spectrum of the Port 3 and are output from the Port 3, and an even wavelength group of λ2, λ4, λ6 and λ8 have the largest loss on the transmission spectrum of the Port 4 and are output from the Port 4. The wavelengths λ1, λ3, λ5 and λ7 with a wavelength interval of 3To output from the Port 3 of the 1st-stage wavelength selective combining and dividing device are transmitted by the 2nd-stage wavelength selective combining and dividing device, then the wavelengths λ1 and λ5 are output from the Port 3 of the 2nd-stage wavelength selective combining and dividing device, and the wavelengths λ3 and λ7 are output from the Port 4 of the 2nd-stage wavelength selective combining and dividing device. The wavelengths λ1 and λ5 with a wavelength interval of $6T_0$ output from the Port 3 of the 2nd-stage wavelength selective combining and dividing device are transmitted by the 3rd-stage wavelength selective combining and dividing device, and then the wavelength λ1 is output from the Port 3 of the 3rd-stage wavelength selective combining and dividing device and the wavelength λ5 is output from the Port 4 of the 3rd-stage wavelength selective combining and dividing device, respectively. Similarly, the routed paths of the other wavelengths are: the wavelengths λ2, λ4, λ6 and λ8 with a wavelength interval of $3T_0$ output from the Port 4 of the 1st-stage wavelength selective combining and dividing device are transmitted by the 2nd-stage wavelength selective combining and dividing device, then the wavelengths λ4 and λ8 are output from the Port 3 of the 2nd-stage wavelength selective combining and dividing device, and the wavelengths λ2 and λ6 are output from the Port 4 of the 2nd-stage wavelength selective combining and dividing device; the wavelengths λ4 and λ8 with a wavelength interval of $6T_0$ output from the Port 3 of the 2nd-stage wavelength selective combining and dividing device are transmitted by the 3rd-stage wavelength selective combining and dividing device, and then the wavelength λ4 is output from the Port 3 of the 3rd-stage wavelength selective combining and dividing device and the wavelength λ8 is output from the Port 4 of the 3rd-stage wavelength selective combining and dividing device, respectively; and the wavelengths λ2 and λ6 with a wavelength interval of $6T_0$ output from the Port 4 of the 2nd-stage wavelength selective combining and dividing device are transmitted by the 3rd-stage wavelength selective combining and dividing device, and then the wavelength λ6 is output from the Port 3 of the 3rd-stage wavelength selective combining and dividing device and the wavelength λ2 is output from the Port 4 of the 3rd-stage wavelength selective combining and dividing device, respectively.

When the routing multiplexer performs the multiplexing function from the device side to the network side, wavelength points with a splitting ratio close to 1:1 (that is, $P/A_0^2$ is about 0.5) on the output spectral curves of the Port 3 and the Port 4 of each stage of wavelength selective combining and dividing device are selected.

In an embodiment, the routing multiplexer is further provided with a wavelength management module configured to implement at least one of the following operations:

sending a first instruction carrying first wavelength indication information to a first central-office unit when the first central-office unit needs to establish a connection with a first terminal unit through the routing multiplexer, with the first wavelength indication information indicating a reception wavelength of a device-side port connected to the first terminal unit; and

sending a second instruction carrying second wavelength indication information to the first terminal unit when the first central-office unit needs to establish a connection with the first terminal unit through the routing multiplexer, with the second wavelength indication information indicating a reception wavelength of a device-side port connected to the first central-office unit.

In an embodiment, the routing multiplexer in the above embodiment is merely an example, and the present disclosure is not limited thereto.

Based on the routing multiplexer provided by the embodiments of the present disclosure, an embodiment of the present disclosure provides a routing multiplexing method for a WDM system. With the routing multiplexing method, emission wavelengths of tunable optical modules at device-side ports at two ends are adjusted to match wavelength routing relationships among different ports of the routing multiplexer, so as to flexibly configure wavelength connection relationships among the different ports. In the embodiment, based on the wavelength routing function of the routing multiplexer, the tunable optical module can just adopt a wideband receiver, with no need for an adjustable receiver, which can greatly reduce the cost and package size of the optical module.

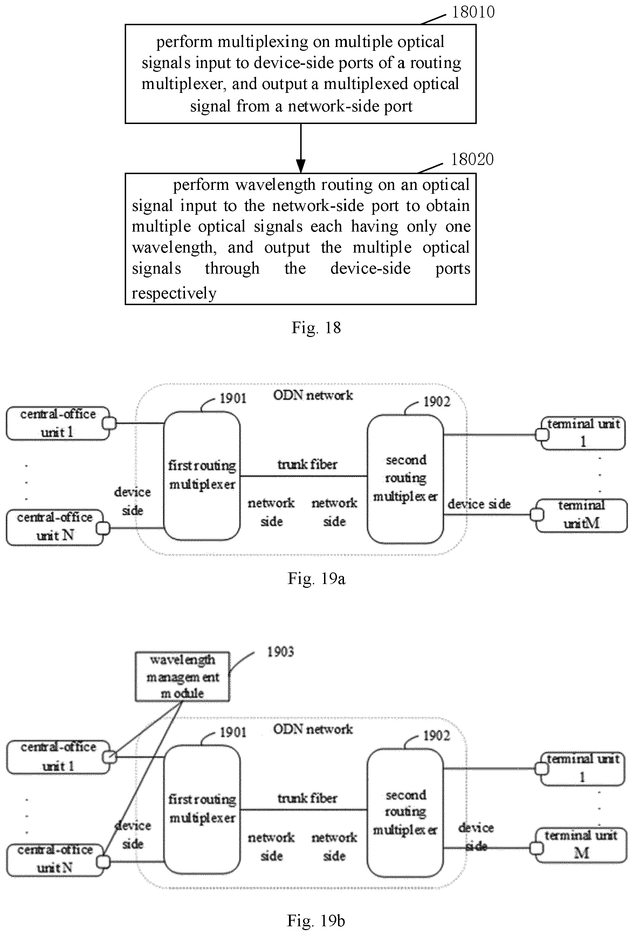

As shown in Fig. 18, an implementation of the present disclosure provides a routing multiplexing method for a WDM system, including:

step 18010, performing multiplexing on multiple WDM optical signals input to device-side ports of a routing multiplexer, and outputting a multiplexed optical signal from a network-side port of the routing multiplexer, with an optical signal in any wavelength among the multiple WDM optical signals capable of being input to any port among the network-side ports; and

step 18020, performing wavelength routing on an optical signal input to the network-side port to obtain multiple optical signals each having only one wavelength, and outputting the multiple optical signals through the device-side ports respectively.

An ODN capable of realizing multiple splitting levels and flexible wavelength division routing can be implemented based on the routing multiplexer provided by the present disclosure.

Fig. 19a is a schematic diagram of a WDM network system according to an implementation of the present disclosure. As shown in Fig. 19a, the network system includes a first routing multiplexer 1901 (at a central office side) and a second routing multiplexer 1902 (at a terminal side), and a network-side port of the first routing multiplexer 1901 is connected to a network-side port of the second routing multiplexer 1902, for example, through a trunk fiber. The first routing multiplexer 1901 performs a multiplexing function and a wavelength routing function on downlink optical signals and uplink optical signals of the WDM system respectively, and the second routing multiplexer 1902 performs a wavelength routing function and a multiplexing function on the downlink optical signals and the uplink optical signals of the WDM system respectively. Reference can be made to the routing multiplexer in the above embodiments for the implementation of the first routing multiplexer 1901 and the second routing multiplexer 1902.

Applicable to the wired optical access, optical transmission and 4G&5G fronthaul fields, the network system can improve the flexibility of wavelength channel configuration of an optical network, and provide a carried service system with the support for the functions of redundancy protection, load sharing and system pooling.

In an embodiment, the first routing multiplexer 1901 and the second routing multiplexer 1902 are deployed in the same way as an AWG in a WDM-PON.

In an embodiment, the network system further includes central-office units (such as Central-office Units 1 to N as shown in Fig. 19a) and terminal units (such as Terminal Units 1 to M as shown in Fig. 19a). Device-side ports of the first routing multiplexer 1901 are connected to the central-office units, and each device-side port of the second routing multiplexer 1902 is connected to one terminal unit. The device-side ports of the first routing multiplexer 1901 are separately connected to the central-office units through central-office fibers, and the plurality of device-side ports of the second routing multiplexer 1902 are separately connected to the terminal units through branch fibers. The network-side ports of the first routing multiplexer 1901 and the second routing multiplexer 1902 are connected to the trunk fiber.

The central-office unit is configured to set an emission wavelength thereof to be a reception wavelength of the device-side port connected to the terminal unit to be connected to the central-office unit; and the terminal unit is configured to set an emission wavelength thereof to be a reception wavelength of the device-side port connected to the central-office unit to be connected to the terminal unit.

The central-office unit is, for example, an optical module of a transmission device at the central office side (such as an OLT), and the terminal unit is, for example, an optical module of a transmission device at the terminal side (such as an ONU). Or, the central-office unit is an optical module of a service device at the central office side (such as a BBU/DU), and the terminal unit is a service device at the terminal side (such as an RRU/AAU). One OLT or BBU/DU may include one or more central-office units, and one ONU or RRU/AAU may include one or more terminal units.

The first routing multiplexer 1901 has a multiplexing function for multiple wavelengths along a direction from the central office side to the terminal side (a downlink direction), that is, an optical signal in any wavelength among the downlink wavelengths input from any device-side port of the first routing multiplexer 1901 can be multiplexed by the first routing multiplexer 1901 and output from the network-side port; and the first routing multiplexer 1901 has a routing function for multiple wavelengths along an uplink direction, that is, uplink optical signals having multiple wavelengths which are multiplexed to the trunk fiber by the second routing multiplexer 1902 can be routed according to the different wavelengths and output through corresponding ports respectively.

The second routing multiplexer 1902 has a routing function for multiple wavelengths along the downlink direction, that is, downlink optical signals having multiple wavelengths which are multiplexed to the trunk fiber by the first routing multiplexer 1901 can be routed according to the different wavelengths and output through corresponding ports respectively. The second routing multiplexer 1902 also has a multiplexing function for multiple wavelengths along a direction from the terminal side to the central office side (the uplink direction), that is, an optical signal in any wavelength among the uplink wavelengths input from any device-side port of the second routing multiplexer 1902 can be multiplexed by the second routing multiplexer 1902 and output from the network-side port.

In an embodiment, as shown in Fig. 19b, the network system further includes a wavelength management module 1903 configured to implement at least one of the following operations:

sending a first instruction carrying first wavelength indication information to a first central-office unit when the first central-office unit needs to establish a connection with a first terminal unit, with the first wavelength indication information indicating a reception wavelength of a device-side port connected to the first terminal unit; and sending a second instruction carrying second wavelength indication information to the first terminal unit when the first central-office unit needs to establish a connection with the first terminal unit, with the second wavelength indication information indicating a reception wavelength of a device-side port connected to the first central-office unit.

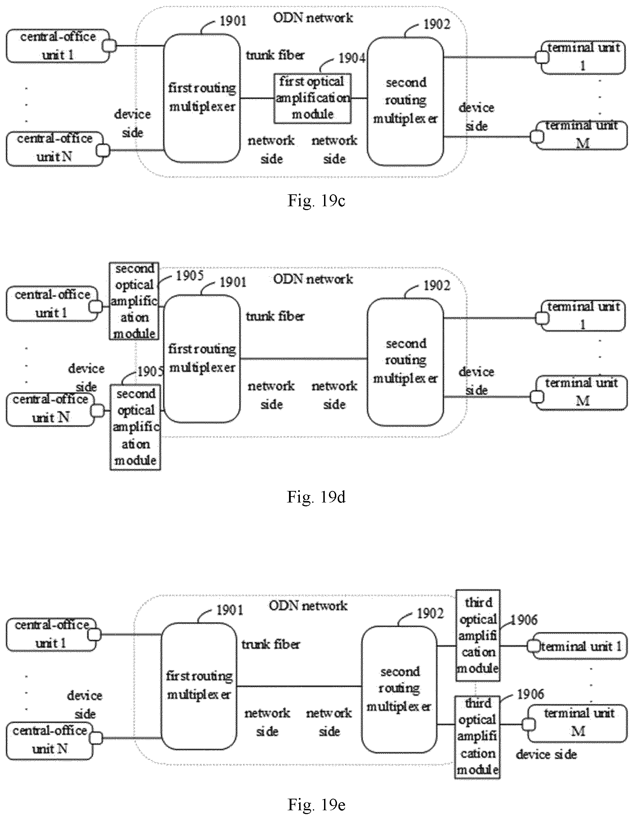

In an embodiment, as shown in Fig. 19c, an embodiment of the present disclosure provides a network system, including a first routing multiplexer 1901, a second routing multiplexer 1902, and a first optical amplification module 1904 connected between a network-side port of the first routing multiplexer 1901 and a network-side port of the second routing multiplexer 1902. In an embodiment, the first optical amplification module 1904 is integrated inside the first routing multiplexer, and is configured to compensate for an optical link loss caused by the multiplexing of WDM optical signals by a routing multiplexer by amplifying downlink optical signals after the downlink optical signals are multiplexed and an uplink optical signal before the uplink optical signal is routed. The first optical amplification module 1904 may be disposed independently or on the first routing multiplexer 1901.

In an embodiment, the optical amplification module is configured to amplify an optical signal from the first routing multiplexer and then input an amplified optical signal to the second routing multiplexer, and amplify an optical signal from the first routing multiplexer and then input an amplified optical signal to the second routing multiplexer.

In an embodiment, as shown in Fig. 19d, an embodiment of the present disclosure provides a network system, including the first routing multiplexer 1901 and the second routing multiplexer 1902, and the network-side port of the first routing multiplexer 1901 is connected to the network-side port of the second routing multiplexer 1902. The network system further includes at least one second optical amplification module 1905 connected to a device-side port of the first routing multiplexer 1901, and the second optical amplification module 1905 is configured to amplify multiple downlink optical signals before the multiple downlink optical signals are multiplexed and amplify an uplink optical signal after the uplink optical signal is routed. The second optical amplification module 1905 may be disposed independently, or on a central-office unit, or on the first routing multiplexer 1901.

In another embodiment, as shown in Fig. 19e, in addition to the first routing multiplexer 1901 and the second routing multiplexer 1902, the network system further includes at least one third optical amplification module 1906 connected to a device-side port of the second routing multiplexer 1902, and the third optical amplification module 1906 is configured to amplify multiple optical signals before the multiple optical signals are multiplexed and amplify an optical signal after the optical signal is routed. The third optical amplification module 1906 may be disposed independently, or on a terminal unit, or on the second routing multiplexer 1902.

In another embodiment, a network system is provided, and includes one or more of the first optical amplification module 1904, the second optical amplification module 1905 and the third optical amplification module 1906.

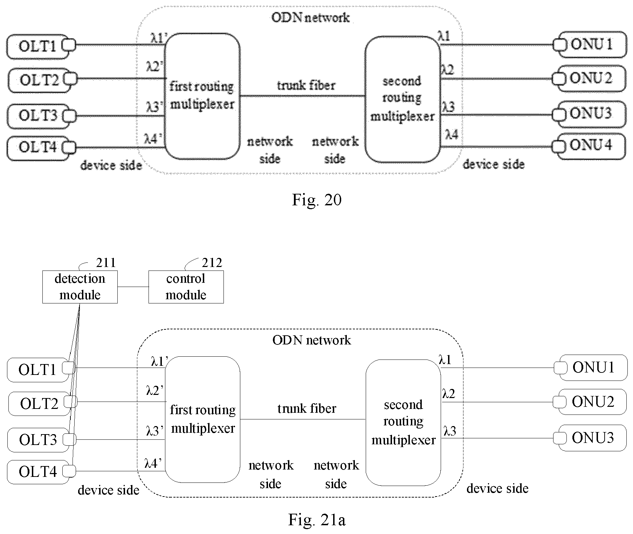

The network system is illustrated below by an example. Fig. 20 shows a WDM network according to an implementation of the present disclosure. In the WDM network, the device-side ports of the first routing multiplexer perform routing allocation on uplink wavelengths λ1', λ2', λ3' and λ4' respectively, that is, the plurality of device-side ports of the first routing multiplexer output optical signals with the wavelengths λ1', λ2', λ3' and λ4' to an OLT1, an OLT2, an OLT3 and an OLT4 respectively, and each port only allows output of an optical signal having one of the multiple wavelengths corresponding to a port number. The device-side ports of the second routing multiplexer perform routing allocation on downlink wavelengths λ1, λ2, λ3 and λ4 respectively, that is, the plurality of device-side ports of the second routing multiplexer output optical signals with the wavelengths λ1, λ2, λ3, and λ4 to an ONU1, an ONU2, an ONU3 and an ONU4 respectively. In the embodiment, each of the OLT 1 to the OLT4 and the ONU 1 to the ONU4 is an optical interface corresponding to one wavelength in the WDM system, or may be one of a plurality of PON ports of one PON device (or one of a plurality of ONU ports of one ONU device), or may be an optical interface of an optical module for transmitting and receiving a single pair of wavelengths, or may be one of a plurality of optical interfaces of a multichannel transmitting and receiving optical module.

When the OLT1 sends a downlink optical signal with the wavelength λ1, the optical signal with the wavelength λ1 sent by the OLT1 is transmitted to the ONU1 after being sequentially multiplexed by the first routing multiplexer and routed by the second routing multiplexer (because the optical signal with the wavelength λ1 is to be output through the device-side port connected to the ONU1); and when the ONU1 sends an uplink optical signal with the wavelength λ1', the optical signal with the wavelength λ1' is transmitted to the OLT1 after being sequentially multiplexed by the second routing multiplexer and routed by the first routing multiplexer, thereby establishing a connection relationship between the OLT1 and the ONU1.

When the OLT1 changes to send a downlink optical signal with the wavelength λ2 and the ONU2 is configured to send the uplink optical signal with the wavelength λ1', the optical signal with the wavelength λ2 sent by the OLT1 is transmitted to the ONU2 after being sequentially multiplexed by the first routing multiplexer and routed by the second routing multiplexer; and the optical signal with the wavelength λ1' sent by the ONU2 is transmitted to the OLT1 after being sequentially multiplexed by the second routing multiplexer and routed by the first routing multiplexer, thereby establishing a connection relationship between the OLT1 and the ONU2.

Similarly, a connection relationship can be established between any OLT and any ONU in the above WDM network. For example, when the OLT4 sends the downlink optical signal with the wavelength of λ1 (i.e., a reception wavelength of the device-side port connected to the ONU1) and the ONU1 sends an uplink optical signal with the wavelength λ4' (i.e., a reception wavelength of the device-side port connected to the OLT4), a connection relationship is established between the OLT4 and the ONU1; and when the OLT3 sends a downlink optical signal with the wavelength of λ2 (i.e., a reception wavelength of the device-side port connected to the ONU2) and the ONU2 sends an uplink optical signal with the wavelength λ3' (i.e., a reception wavelength of the device-side port connected to the OLT3), a connection relationship is established between the OLT3 and the ONU2. Compared with the existing art, the embodiment can realize flexible connection between different OLTs and different ONUs and N+1 port redundant backup. In addition, due to the configuration of the first and second routing multiplexers having the wavelength routing function, the optical modules at the sides of OLTs and ONUs can all adopt wideband receivers, with no need for an adjustable receiver having an adjustable filtering function. In the embodiment, the first routing multiplexer and the second routing multiplexer can be implemented in various ways, and the first routing multiplexer and the second routing multiplexer may be different in type, but the first routing multiplexer and the second routing multiplexer should satisfy the condition that one of the two routing multiplexer has a routing function for the signals having multiple wavelengths which are multiplexed by the other routing multiplexer and input to the network-side port, and vice versa.

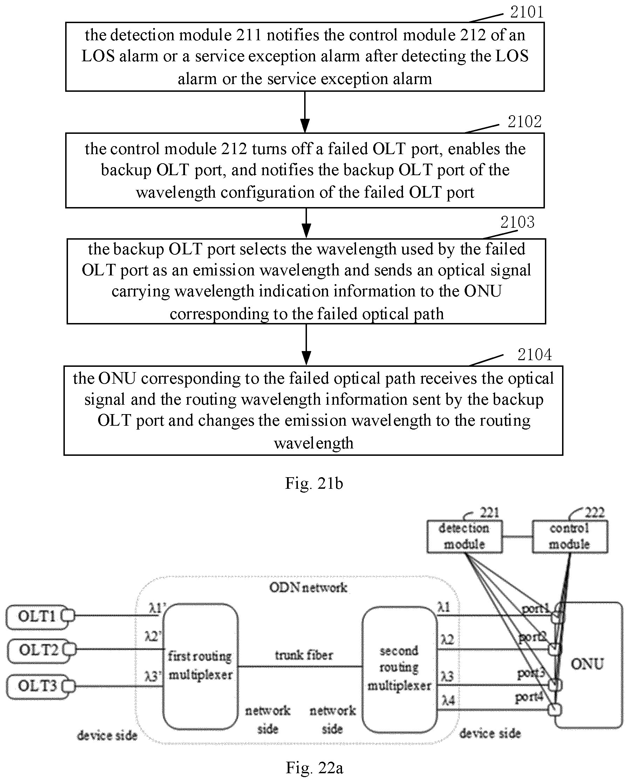

The network system can be configured to implement OLT N+1 port redundant backup. As shown in Fig. 21a, the network system includes an OLT1, an OLT2, an OLT3, an OLT4, a detection module 211, a control module 212, an ONU1, an ONU2 and an ONU3, with the OLT4 used as a redundant backup port for the OLT1 to the OLT3. When any one of the optical paths between the OLT1 to the OLT3 and the ONU1 to the ONU3 fails, the backup OLT is enabled. As shown in Fig. 21b, a redundant backup method of the network system includes steps 2101 to 2104.

At step 2101, the detection module 211 notifies the control module 212 of a Lost of Synchronous (LOS) alarm or a service exception alarm after detecting the LOS alarm or the service exception alarm.

At step 2102, the control module 212 turns off an OLT port corresponding to the failed optical path (referred to as a failed OLT port for short), enables the backup OLT port, and notifies the backup OLT port of the wavelength configuration of the failed OLT port.

For example, when it is detected that the OLT3 fails, the OLT3 is turned off, and the OLT4 is enabled and is notified of the wavelength configuration of the OLT3 port (that is, an emission wavelength λ3 of the OLT3, which is a routing wavelength corresponding to the port of the routing multiplexer connected to the ONU3 at the opposite end of the failed optical path).

At step 2103, the backup OLT port selects the wavelength used by the failed OLT port as an emission wavelength and sends an optical signal carrying wavelength indication information to the ONU corresponding to the failed optical path, with the wavelength indication information being the routing wavelength information corresponding to the port of the routing multiplexer connected to the backup OLT port.

The OLT4 sets the emission wavelength thereof to $\lambda 3$ according to the received wavelength configuration, and sends an optical signal to the ONU3 at the opposite end of the failed optical path, and the optical signal carries the routing wavelength information (i.e., $\lambda 4$') corresponding to the port of the routing multiplexer connected to the OLT4.

At step 2104, the ONU corresponding to the failed optical path receives the optical signal and the routing wavelength information sent by the backup OLT port and changes the emission wavelength to the routing wavelength, thereby establishing a connection between the backup OLT port and the ONU

For example, after receiving the optical signal, the ONU3 changes the emission wavelength thereof to $\lambda 4$', so that a connection is established between the OLT4 and the ONU3 .

In an embodiment, the backup may be performed among a plurality of ports of the same OLT. For example, an OLT includes a plurality of ports (one of which is used as a backup port), and when a port of the OLT fails, the failed port is replaced with the backup port.

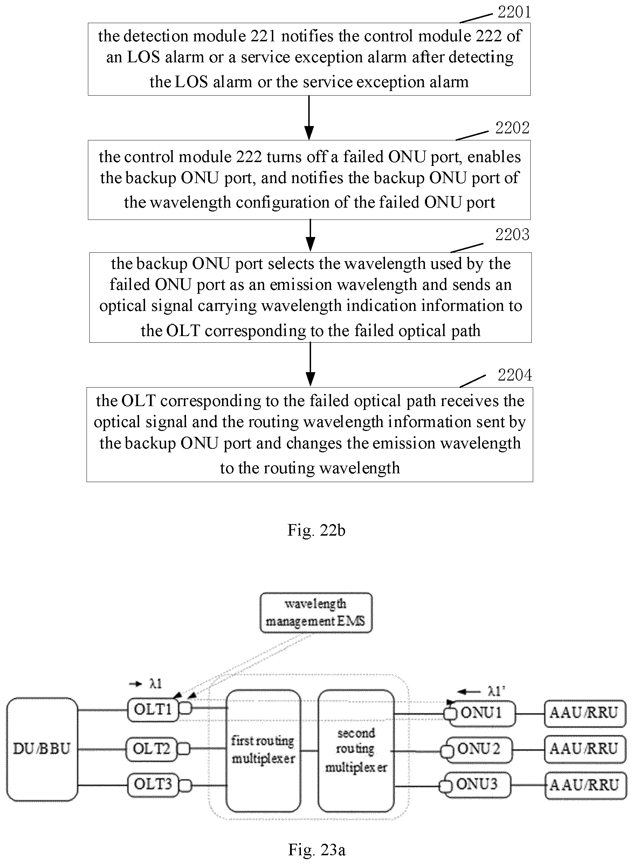

In another embodiment, the network system can be configured to implement ONU N+1 port redundant backup, with one ONU provided with a plurality of optical module interfaces and one optical module interface used as a backup for the other optical module interfaces. As shown in Fig. 22a, the network system includes an OLT1, an OLT2, an OLT3, a detection module 221, a control module 222 and an ONU including four ports, namely port1 to port4, and the port4 of the ONU is used as a redundant backup port for the port1 to the port3 of the ONU. When any one of the optical paths between the OLT1 to the OLT3 and the port1 to the port3 of the ONU fails, the backup ONU port is enabled. As shown in Fig. 22b, a redundant backup method of the network system includes steps 2201 to 2204.

At step 2201, the detection module 221 notifies the control module 222 of an LOS alarm or a service exception alarm after detecting the LOS alarm or the service exception alarm.

At step 2202, the control module 222 turns off an ONU port corresponding to the failed optical path (referred to as a failed ONU port for short), enables the backup ONU port, and notifies the backup ONU port of the wavelength configuration of the failed ONU port.

For example, when it is detected that the port3 of the ONU fails, the port3 of the ONU is turned off, and the port4 of the ONU is enabled and is notified of the wavelength configuration of the port3 of the ONU port (the wavelength configuration is $\lambda 3$' in the embodiment, that is, a routing wavelength corresponding to the port of the routing multiplexer connected to the OLT3 at the opposite end of the failed optical path).

At step 2203, the backup ONU port selects the wavelength used by the failed ONU port as an emission wavelength and sends an optical signal carrying wavelength indication information to the OLT corresponding to the failed optical path, with the wavelength indication information being the routing wavelength information corresponding to the port of the routing multiplexer connected to the backup ONU port.

The port4 of the ONU sets the emission wavelength thereof to $\lambda 3$' according to the received wavelength configuration, and sends an optical signal to the OLT3, and the optical signal carries the routing wavelength information (i.e., $\lambda 4$) corresponding to the port of the routing multiplexer connected to the port4 of the ONU

At step 2204, the OLT corresponding to the failed optical path receives the optical signal and the routing wavelength information sent by the backup ONU port and changes the emission wavelength to the routing wavelength, thereby establishing a connection between the backup ONU port and the OLT.

For example, after receiving the optical signal, the OLT3 changes the emission wavelength thereof to $\lambda 4$, so that a connection is established between the OLT3 and the port4 of the ONU

In another embodiment, the backup may be performed among a plurality of ONUs, with one ONU used as a backup for the other ONUs. When one of the other ONUs fails, the backup ONU is enabled with a redundant back method similar to those in the above embodiments. Thus, the redundant back method is not repeated here.

In another embodiment, a network system is provided, and includes one or more OLTs and one or more ONUs, each OLT includes one or more optical modules, each ONU includes one or more optical modules, one or more optical modules at the side of the OLTs are used as backups, and one or more optical modules at the side of the ONUs are used as backups. After optical paths are created between the optical modules at the side of the OLTs and the optical modules at the side of the ONUs, a backup optical module is enabled when one of the optical paths fails.

In the above embodiment, when the network system supports trunk fiber protection, each of the first routing multiplexer and the second routing multiplexer includes two network-side ports connected through two trunk fibers.

The above network system is further illustrated below by an embodiment.

As shown in Fig. 23a, in this embodiment, an ODN network formed by a first routing multiplexer and a second routing multiplexer can be directly connected to OLTs and ONUs used as transmission devices, and the OLTs and the ONUs are then connected to service devices, such as a BBU/DU and an RRU/AAU in the 4G or 5G fronthaul field. Wavelength management is achieved in such a way that an Element Management System (EMS) directly sends an instruction to the OLT (or an OLT PON port), the OLT selects an emission wavelength which corresponds to an ONU, and the OLT notifies the ONU through a downlink wavelength channel to ask the ONU to select such an uplink emission wavelength that makes an uplink wavelength channel of the ONU correspond to the OLT (or the OLT PON port). In this way, uplink and downlink wavelength channels are created between the pair of the OLT and the ONU

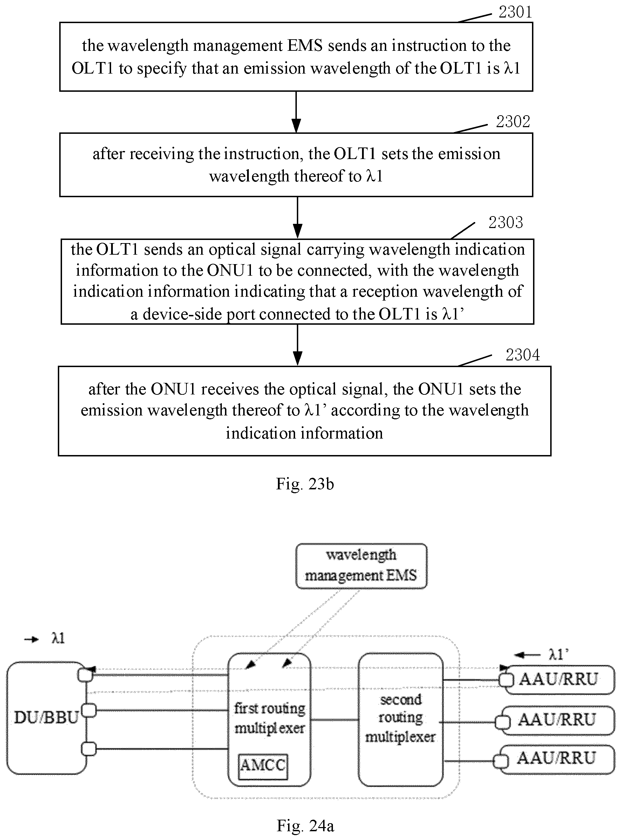

As shown in Fig. 23b, if a connection needs to be established between the OLT1 and the ONU1, a wavelength division routing method is performed and includes steps 2301 to 2304.

At step 2301, the wavelength management EMS sends an instruction to the OLT1 to specify that an emission wavelength of the OLT1 is $\lambda 1$ (i.e., a reception wavelength of a device-side port connected to the ONU1 to be connected to the OLT1).

At step 2302, after receiving the instruction, the OLT1 sets the emission wavelength thereof to $\lambda 1$.

In an embodiment, the instruction sent by the EMS is not necessary, for example, the setting of the emission wavelength can be directly carried out on the OLT1.

At step 2303, the OLT1 sends an optical signal carrying wavelength indication information to the ONU1 to be connected, with the wavelength indication information indicating that a reception wavelength of a device-side port connected to the OLT1 is $\lambda 1$'.

At step 2304, after the ONU1 receives the optical signal, the ONU1 sets the emission wavelength thereof to $\lambda 1$' according to the wavelength indication information carried by the optical signal.

Then, the ONU1 may send an optical signal with the wavelength $\lambda 1$' to the OLT1 to confirm the created wavelength connection channel. Or, the ONU1 may not perform the confirmation.

As shown in Fig. 24a, in another embodiment of the present disclosure, the ODN network formed by the first routing multiplexer and the second routing multiplexer can be directly connected to service devices (such as a DU/BBU and an AAU/RRU) provided with optical modules, and the optical module at a port of the service device can receive a wavelength setting instruction from the first routing multiplexer and adjust an emission wavelength accordingly. A wavelength channel between the DU/BBU and the AAU/RRU is created by directly sending instructions by the first routing multiplexer through an Auxiliary Management and Control Channel (AMCC) or a third wavelength, in which case a wavelength management module may be disposed on the first routing multiplexer or independent of the first routing multiplexer, and the optical module built in the DU/BBU and the AAU/RRU is required to have a function of receiving an AMCC signal or a third wavelength signal (the third wavelength is a wavelength other than the wavelength of a to-be-created transmission optical path) and a function of automatically adjusting an emission wavelength according to a received signal.

As shown in Fig. 24a, the DU/BBU is provided with one or more optical modules, each of which can be connected to one AAU/RRU. Fig. 24a only shows one DU/BBU. In other embodiments, a plurality of DUs/BBUs may be provided.

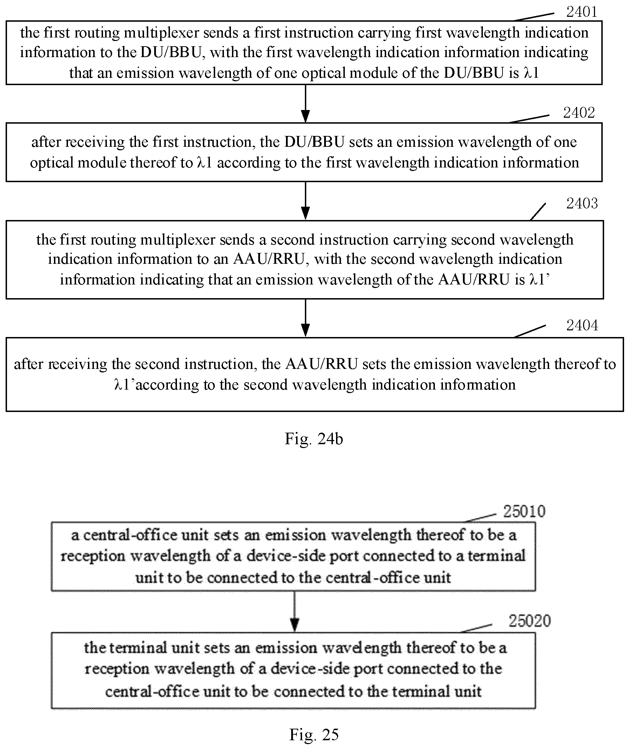

As shown in Fig. 24b, a wavelength division routing method includes steps 2401 to 2404.

At step 2401, the first routing multiplexer sends a first instruction carrying first wavelength indication information to the DU/BBU through an AMCC signal, with the first wavelength indication information indicating that an emission wavelength of one optical module of the DU/BBU is $\lambda 1$.

At step 2402, after receiving the first instruction, the DU/BBU sets an emission wavelength of one optical module thereof to $\lambda 1$ according to the first wavelength indication information carried by the first instruction.

At step 2403, the first routing multiplexer sends a second instruction carrying second wavelength indication information to an AAU/RRU through an AMCC signal, with the second wavelength indication information indicating that an emission wavelength of the AAU/RRU is $\lambda 1$'.

At step 2404, after receiving the second instruction, the AAU/RRU sets the emission wavelength thereof to $\lambda 1$' according to the second wavelength indication information carried by the second instruction.

The first routing multiplexer may separately send instructions to the DU/BBU and the AAU/RRU after receiving an instruction from the wavelength management EMS (for example, an instruction to establish a connection between the DU/BBU and the AAU/RRU).

In an embodiment, the steps 2403 and 2404 may be carried out before the step 2401.

In an embodiment, the emission wavelength may be set in other ways, for example, the setting of the emission wavelengths are directly carried out on the DU/BBU and the AAU/RRU.

Based on the above network system, an embodiment of the present disclosure provides a wavelength division routing method for a WDM system, including that:

for connecting a plurality of central-office units (optical transmitting and receiving devices) to a plurality of terminal units (optical transmitting and receiving devices), between any central-office unit and any terminal unit which needs to be connected to each other, the central-office unit sets an emission wavelength thereof to be a reception wavelength of a device-side port connected to the terminal unit to be connected, and the terminal unit sets an emission wavelength thereof to be a reception wavelength of a network-side port connected to the central-office unit to be connected.

An embodiment of the present disclosure provides a wavelength division routing method applicable to the network system provided by any one of the embodiments. As shown in Fig. 25, the method includes:

step 25010, in which a central-office unit sets an emission wavelength thereof to be a reception wavelength of a device-side port connected to a terminal unit to be connected to the central-office unit; and

step 25020, in which the terminal unit sets an emission wavelength thereof to be a reception wavelength of a device-side port connected to the central-office unit to be connected to the terminal unit.

In an embodiment, before the step in which the terminal unit sets the emission wavelength thereof to be the reception wavelength of the device-side port connected to the central-office unit to be connected to the terminal unit, the method further includes that:

the central-office unit sends an optical signal with the set emission wavelength to the to-be-connected terminal unit, with the optical signal carrying wavelength indication information which indicates the reception wavelength of the device-side port connected to the central-office unit.

The step in which the terminal unit sets the emission wavelength thereof to be the reception wavelength of the device-side port connected to the central-office unit to be connected to the terminal unit includes that:

after the terminal unit receives the optical signal, the terminal unit sets the emission wavelength thereof according to the wavelength indication information carried by the optical signal.

In an embodiment, the step in which the central-office unit sets the emission wavelength thereof to the reception wavelength of the device-side port connected to the terminal unit to be connected to the central-office unit includes that:

the central-office unit receives a first instruction from the first routing multiplexer, and sets the emission wavelength of the central-office unit to be the reception wavelength of the device-side port connected to the terminal unit to be connected to the central-office unit according to first wavelength indication information carried by the first instruction.

The step in which the terminal unit sets the emission wavelength thereof to be the reception wavelength of the device-side port connected to the central-office unit to be connected to the terminal unit includes that:

the terminal unit receives a second instruction from the first routing multiplexer, and sets the emission wavelength of the terminal unit to be the reception wavelength of the device-side port connected to the central-office unit to be connected to the terminal unit according to second wavelength indication information carried by the second instruction.

The functional modules or units in all or some of the steps, the systems and the devices in the method disclosed above may be implemented as software, firmware, hardware, or suitable combinations thereof. If implemented as hardware, the division between the functional modules or units stated above is not necessarily corresponding to the division of physical components; for example, one physical component may have a plurality of functions, or one function or step may be performed by one physical component or through cooperation of several physical components. Some or all of the components may be implemented as software executed by a processor, such as a digital signal processor or a microprocessor, or may be implemented as hardware, or may be implemented as an integrated circuit, such as an application specific integrated circuit. Such software may be distributed on computer-readable media, which may include computer storage media (or non-transitory media) and communication media (or transitory media). The term "computer storage media" includes volatile/nonvolatile and removable/non-removable media used in any method or technology for storing information (such as computer-readable instructions, data structures, program modules and other data). The computer storage media include a Random Access Memory (RAM), a Read-Only Memory (ROM), an Electrically Erasable Programmable Read-Only Memory (EEPROM), a Flash Memory or other memory techniques, a Compact Disc Read Only Memory (CD-ROM), a Digital Video Disk (DVD) or other optical discs, a magnetic cassette, a magnetic tape, a magnetic disk or other magnetic storage devices, or any other media which can be configured to store the desired information and can be accessed by a computer. In addition, the communication media generally include computer-readable instructions, data structures, program modules, or other data in modulated data signals such as carrier wave or other transmission mechanism, and may include any information delivery medium.

## Claims

1. A routing multiplexer for a wavelength division multiplexing system, comprising a network-side port and a plurality of device-side ports, wherein

the routing multiplexer is configured to perform multiplexing on multiple wavelength division multiplexing optical signals input to the plurality of device-side ports and output a multiplexed optical signal from the network-side port, wherein each wavelength division multiplexing optical signal input to each device-side port is an optical signal having at least one wavelength among the multiple wavelength division multiplexing optical signals; and

the routing multiplexer is further configured to perform wavelength routing on a wavelength division multiplexing optical signal input to the network-side port to obtain multiple wavelength division multiplexing optical signals each having only one wavelength, and output each wavelength division multiplexing optical signal through one of the plurality of device-side ports.

**2.** The routing multiplexer of claim 1, wherein outputting each wavelength division multiplexing optical signal through one of the plurality of device-side ports comprises outputting each wavelength division multiplexing optical signal through a fixed device-side port corresponding to a wavelength of the wavelength division multiplexing optical signal.

**3.** The routing multiplexer of claim 1, comprising a splitter connected to the network-side port, splitters connected to the plurality of device-side ports respectively, a combiner and a demultiplexer, wherein the splitter connected to the network-side port corresponds to the network-side port, the splitters connected to the plurality of device-side ports respectively are in one to one correspondence with the plurality of device-side ports, a plurality of input ports of the combiner are respectively connected to the splitters which are respectively connected to the plurality of device-side ports, an output port of the combiner is connected to the splitter connected to the network-side port, an input port of the demultiplexer is connected to the splitter connected to the network-side port, and a plurality of output ports of the demultiplexer are respectively connected to the splitters which are respectively connected to the plurality of device-side ports, wherein:

the splitter connected to the network-side port is configured to guide a wavelength division multiplexing optical signal from the network-side port to the demultiplexer and guide a wavelength division multiplexing optical signal from the combiner to the network-side port for output;
the splitters connected to the plurality of device-side ports respectively are configured to guide wavelength division multiplexing optical signals from the demultiplexer to the plurality of device-side ports for output and guide wavelength division multiplexing optical signals from the plurality of device-side ports to the combiner;
the combiner is configured to couple wavelength division multiplexing optical signals input from the plurality of input ports thereof together and output a coupled optical signal from the output port thereof to the splitter connected to the network-side port; and
the demultiplexer is configured to route a mixed wavelength division multiplexing optical signal having multiple wavelengths from the input port thereof according to wavelengths and respectively output obtained optical signals from the plurality of output ports thereof to the splitters connected to the plurality of device-side ports respectively.

**4.** The routing multiplexer of claim 3, wherein the splitter comprises at least one of a thin-film filter, a fiber Bragg grating, a multimode interference coupler, a directional coupler and a loop device.

**5.** The routing multiplexer of claim 3, wherein the combiner is a power divider having a wavelength-independent characteristic.

**6.** The routing multiplexer of any one of claims 3 to 5, wherein the demultiplexer is a multi-port wavelength division multiplexing device.

**7.** The routing multiplexer of claim 1, comprising a combining and dividing device and at least one filter, wherein the combining and dividing device comprises a first port and at least one second port, and each of the at least one filter comprises a third port and a fourth port; a number of the at least one filter is the same as that of the plurality of device-side ports, and a number of the at least one second ports is the same as that of the plurality of device-side ports, each device-side port of the plurality of device-side ports is connected to the fourth port of one of the at least one filter, and each second port of the at least one second port is connected to the third port of one of the at least one filter; and the first port of the combining and dividing device is connected to the network-side port, each second port of the at least one second port of the combining and dividing device is connected to the third port of a corresponding filter, and the fourth port of each of the at least one filter is connected to a corresponding device-side port, wherein:

the combining and dividing device is configured to perform multiplexing on multiple wavelength division multiplexing optical signals from the at least one filter and output a multiplexed optical signal to the network-side port, and divide a mixed wavelength division multiplexing optical signal having multiple wavelengths from the network-side port and guide obtained optical signals to the at least one filter; and
each of the at least one filter is configured to extract an optical signal having a wavelength corresponding to the device-side port connected to the filter from the mixed wavelength division multiplexing optical signal having multiple wavelengths input from the combining and dividing device, and output an extracted optical signal through the connected device-side port, and transmit and input a wavelength division multiplexing optical signal from the connected device-side port to the combining and dividing device.

8. The routing multiplexer of claim 7, wherein the combining and dividing device is a power divider having a wavelength-independent characteristic.

9. The routing multiplexer of claim 7 or 8, wherein each of the at least one filter is a wavelength division multiplexing device.

10. The routing multiplexer of claim 1, comprising a 1st-stage wavelength selective combining and dividing device to an $N^{th}$-stage wavelength selective combining and dividing device disposed from the network-side port to the plurality of device-side ports, wherein each wavelength selective combining and dividing device comprises one fifth port and M sixth ports, with M being a positive integer greater than 1, a total number of sixth ports of wavelength selective combining and dividing device(s) in an $i^{th}$ stage is equal a number of wavelength selective combining and dividing devices in an $(i+1)^{th}$ stage, each sixth port of each wavelength selective combining and dividing device in the $i^{th}$ stage is connected to one fifth port of the wavelength selective combining and dividing device in the $(i+1)^{th}$ stage, with i =1 ... N-1 and N being a positive integer greater than 1, each sixth port of the wavelength selective combining and dividing devices in the $N^{th}$ stage is connected to one device-side port of the plurality of device-side ports, and the fifth port of the wavelength selective combining and dividing device in the 1st stage is connected to the network-side port, wherein
the wavelength selective combining and dividing device is configured to couple all wavelength division multiplexing optical signals input to the sixth ports thereof together and output a coupled optical signal from the fifth port thereof, and divide a mixed wavelength division multiplexing optical signal having multiple wavelengths input to the fifth port thereof into M groups and output the M groups through the M sixth ports thereof respectively.

11. The routing multiplexer of claim 10, wherein the wavelength selective combining and dividing device comprises at least one of a directional coupler, a Mach-Zehnder interferometer and an etalon.

12. The routing multiplexer of claim 10 or 11, wherein M=2.

13. The routing multiplexer of claim 12, wherein dividing the mixed optical signal having multiple wavelengths input to the fifth port of the wavelength selective combining and dividing device into M groups comprises dividing the optical signal, which is input to the fifth port of the wavelength selective combining and dividing device and has multiple wavelengths evenly spaced at a first interval, into a first group and a second group, the first group and the second group are the same in a number of optical signals, each of the first group and the second group comprises an optical signal having multiple wavelengths evenly spaced at a second interval, and the second interval is twice the first interval.

14. The routing multiplexer of any one of claims 1 to 13, wherein the routing multiplexer is further provided with a wavelength management module configured to implement at least one of the following operations:

in a case where a first central-office unit is to be connected to a first terminal unit through the routing multiplexer, sending a first instruction carrying first wavelength indication information to the first central-office unit, with the first wavelength indication information indicating a reception wavelength of a device-side port connected to the first terminal unit; and
in a case where the first central-office unit is to be connected to the first terminal unit through the routing multiplexer, sending a second instruction carrying second wavelength indication information to the first terminal unit, with the second wavelength indication information indicating a reception wavelength of a device-side port connected to the first central-office unit.

15. A network system, comprising a first routing multiplexer according to any one of claims 1 to 13 and a second routing multiplexer according to any one of claims 1 to 13, wherein the network-side port of the first routing multiplexer is connected to the network-side port of the second routing multiplexer.

16. The network system of claim 15, further comprising at least one central-office unit and at least one terminal unit, wherein each device-side port of the first routing multiplexer is connected to one central-office unit, and each device-side port of the second routing multiplexer is connected to one terminal unit.

17. The network system of claim 16, wherein

the central-office unit is configured to set an emission wavelength thereof to be a reception wavelength of the device-side port connected to the terminal unit to be connected to the central-office unit; and
the terminal unit is configured to set an emission wavelength thereof to be a reception wavelength of the device-side port connected to the central-office unit to be connected to the terminal unit.

18. The network system of claim 16 or 17, further comprising a wavelength management module configured to implement at least one of the following operations:

in a case where a first central-office unit is to be connected to a first terminal unit, sending a first instruction carrying first wavelength indication information to the first central-office unit, with the first wavelength indication information indicating a reception wavelength of the device-side port connected to the first terminal unit; and
in a case where the first central-office unit is to be connected to the first terminal unit, sending a second instruction carrying second wavelength indication information to the first terminal unit, with the second wavelength indication information indicating a reception wavelength of the device-side port connected to the first central-office unit.

19. A network system, comprising a first routing multiplexer according to any one of claims 1 to 13, a second routing multiplexer according to any one of claims 1 to 13, and an optical amplification module, wherein the network-side port of the first routing multiplexer is connected to one end of the optical amplification module, the other end of the optical amplification module is connected to the network-side port of the second routing multiplexer, and the optical amplification module is configured to amplify a wavelength division multiplexing optical signal from the first routing multiplexer and then input an amplified optical signal to the second routing multiplexer, and amplify a wavelength division multiplexing signal from the first routing multiplexer and then input an amplified optical signal to the second routing multiplexer.

20. A routing multiplexing method, comprising:

performing multiplexing on multiple wavelength division multiplexing optical signals input to device-side ports of a routing multiplexer, and outputting a multiplexed optical signal from a network-side port of the routing multiplexer; and
performing wavelength routing on a wavelength division multiplexing optical signal input to the network-side port to obtain multiple wavelength division multiplexing optical signals each having only one wavelength, and outputting the multiple wavelength division multiplexing optical signals through the device-side ports respectively.

21. A wavelength division routing method, applied to the network system of any one of claims 15 to 19, comprising,

setting, by a central-office unit, an emission wavelength thereof to be a reception wavelength of the device-side port connected to a terminal unit to be connected to the central-office unit; and
setting, by the terminal unit, an emission wavelength thereof to be a reception wavelength of the device-side port connected to the central-office unit to be connected to the terminal unit.

22. The wavelength division routing method of claim 21, wherein before the step of setting, by the terminal unit, the emission wavelength thereof to be the reception wavelength of the device-side port connected to the central-office unit to be connected to the terminal unit, the method further comprises:

sending, by the central-office unit, an optical signal with the set emission wavelength to the to-be-connected terminal unit, with the optical signal carrying wavelength indication information which indicates the reception wavelength of the device-side port connected to the central-office unit;
the step of setting, by the terminal unit, the emission wavelength thereof to be the reception wavelength of the device-side port connected to the central-office unit to be connected to the terminal unit comprises:
after the terminal unit receives the optical signal, setting, by the terminal unit, the emission wavelength thereof according to the wavelength indication information carried by the optical signal.

23. The wavelength division routing method of claim 21, wherein
the step of setting, by the central-office unit, the emission wavelength thereof to the reception wavelength of the device-side port connected to the terminal unit to be connected to the central-office unit comprises:

receiving, by the central-office unit, a first instruction from the first routing multiplexer, and setting, by the central-office unit, the emission wavelength of the central-office unit to be the reception wavelength of the device-side port connected to the terminal unit to be connected to the central-office unit according to first wavelength indication information carried by the first instruction;

the step of setting, by the terminal unit, the emission wavelength thereof to be the reception wavelength of the device-side port connected to the central-office unit to be connected to the terminal unit comprises:

receiving, by the terminal unit, a second instruction from the first routing multiplexer, and setting, by the terminal unit, the emission wavelength of the terminal unit to be the reception wavelength of the device-side port connected to the central-office unit to be connected to the terminal unit according to second wavelength indication information carried by the second instruction.

Fig. 1

Fig. 2

Fig. 3

device-side port 32

any one or more of λ1,λ2,…,λn

any one or more of λ1,λ2,…,λn

.

.

.

any one or more of λ1,λ2,…,λn

device side

routing multiplexer

λ1,λ2,…,λn

network-side port 31

network side

Fig. 4

device-side port 32

λ1'

network-side port 31

λ1',λ2',…λn'

routing multiplexer

λ2'

.

.

.

λn'

network side

device side

Fig. 5

combiner 603

splitter 602

splitter 601

network
side

device
side

splitter

demultiplexer 604

Fig. 6

combiner 603

splitter602

network side

splitter 601

λ1

λ1，λ2

λ1，λ2

λ1

device side

splitter

λ2

λ2

λ2

demultiplexer 604

Fig. 7

Fig. 8

Fig. 9

Fig. 10

first filter

λ3            λ3

network side

λ3， λ4        device side

λ4          λ4

combining  and  dividing
device 901       second filter

Fig. 11

1st-stage wavelength
selective combining
and dividing device

2nd-stage wavelength
selective combining
and dividing device

Nth-stage wavelength
selective combining and
dividing device

sixth port

fifth port

wavelength selective combining
and dividing device

wavelength selective
combining and dividing device

sixth
port

fifth
port

sixth port

sixth port

fifth
port

sixth port

fifth port

sixth port

sixth
port

fifth
port

sixth port

sixth port

network
side

sixth
port

fifth
port

sixth port

sixth port

... wavelength selective combining
and dividing device

wavelength selective
combining and
dividing device

wavelength selective
combining and
dividing device

sixth port

fifth port

sixth port

wavelength selective
combining and dividing
device

device
side

Fig. 12

second wavelength
selective combining
and dividing device

λ1

λ1， λ3

λ3

λ1， λ2， λ3， λ4

network
side

first wavelength
selective combining
and dividing device

λ2， λ4

third wavelength
selective combining
and dividing device

λ2

λ4

device
side

Fig. 13

second wavelength
selective combining
and diving device

λ5, λ6

λ5
λ6

λ5, λ6, λ7, λ8

network
side

first wavelength
selective combining
and dividing device

λ7, λ8

third wavelength
selective combining
and dividing device

λ7
λ8

device
side

Fig. 14

1

input ports at
network side

$k_1$

$l_1$

$l_2$

$k_2$

3

output ports at
device side

2

4

Fig. 15

Fig. 16

Fig. 17a

Fig. 17b

18010

perform multiplexing on multiple optical signals input to device-side ports of a routing multiplexer, and output a multiplexed optical signal from a network-side port

18020

perform wavelength routing on an optical signal input to the network-side port to obtain multiple optical signals each having only one wavelength, and output the multiple optical signals through the device-side ports respectively

Fig. 18

Fig. 19a

Fig. 19b

central-office unit 1

central-office unit N

device side

ODN network

first routing multiplexer 1901

trunk fiber

first optical amplification module 1904

second routing multiplexer 1902

network side

network side

device side

terminal unit 1

terminal unit M

Fig. 19c

second optical amplification module

central-office unit 1

device side

central-office unit N

second optical amplification module 1905

ODN network

first routing multiplexer 1905 1901

trunk fiber

network side

network side

second routing multiplexer 1902

device side

terminal unit 1

terminal unit M

Fig. 19d

central-office unit 1

device side

central-office unit N

ODN network

first routing multiplexer 1901

trunk fiber

network side

network side

second routing multiplexer 1902

third optical amplification module 1906

terminal unit 1

third optical amplification module 1906

terminal unit M

device side

Fig. 19e

Fig. 20

Fig. 21a

2101

the detection module 211 notifies the control module 212 of an LOS alarm or a service exception alarm after detecting the LOS alarm or the service exception alarm

2102

the control module 212 turns off a failed OLT port, enables the backup OLT port, and notifies the backup OLT port of the wavelength configuration of the failed OLT port

2103

the backup OLT port selects the wavelength used by the failed OLT port as an emission wavelength and sends an optical signal carrying wavelength indication information to the ONU corresponding to the failed optical path

2104

the ONU corresponding to the failed optical path receives the optical signal and the routing wavelength information sent by the backup OLT port and changes the emission wavelength to the routing wavelength

Fig. 21b

221 detection module

222 control module

ODN network

OLT1 λ1'

OLT2 λ2'

OLT3 λ3'

first routing multiplexer

trunk fiber

network side

second routing multiplexer

λ1 port1

λ2 port2

λ3 port3

λ4 port4

ONU

network side

device side

device side

Fig. 22a

2201

the detection module 221 notifies the control module 222 of an LOS alarm or a service exception alarm after detecting the LOS alarm or the service exception alarm

2202

the control module 222 turns off a failed ONU port, enables the backup ONU port, and notifies the backup ONU port of the wavelength configuration of the failed ONU port

2203

the backup ONU port selects the wavelength used by the failed ONU port as an emission wavelength and sends an optical signal carrying wavelength indication information to the OLT corresponding to the failed optical path

2204

the OLT corresponding to the failed optical path receives the optical signal and the routing wavelength information sent by the backup ONU port and changes the emission wavelength to the routing wavelength

Fig. 22b

Fig. 23a

2301

the wavelength management EMS sends an instruction to the OLT1 to specify that an emission wavelength of the OLT1 is λ1

2302

after receiving the instruction, the OLT1 sets the emission wavelength thereof to λ1

2303

the OLT1 sends an optical signal carrying wavelength indication information to the ONU1 to be connected, with the wavelength indication information indicating that a reception wavelength of a device-side port connected to the OLT1 is λ1'

2304

after the ONU1 receives the optical signal, the ONU1 sets the emission wavelength thereof to λ1' according to the wavelength indication information

Fig. 23b

wavelength management EMS

→ λ1

DU/BBU

first routing multiplexer

AMCC

second routing multiplexer

← λ1'

AAU/RRU

AAU/RRU

AAU/RRU

Fig. 24a

2401

the first routing multiplexer sends a first instruction carrying first wavelength indication information to the DU/BBU, with the first wavelength indication information indicating that an emission wavelength of one optical module of the DU/BBU is $\lambda 1$

2402

after receiving the first instruction, the DU/BBU sets an emission wavelength of one optical module thereof to $\lambda 1$ according to the first wavelength indication information

2403

the first routing multiplexer sends a second instruction carrying second wavelength indication information to an AAU/RRU, with the second wavelength indication information indicating that an emission wavelength of the AAU/RRU is $\lambda 1'$

2404

after receiving the second instruction, the AAU/RRU sets the emission wavelength thereof to $\lambda 1'$ according to the second wavelength indication information

Fig. 24b

25010

a central-office unit sets an emission wavelength thereof to be a reception wavelength of a device-side port connected to a terminal unit to be connected to the central-office unit

25020

the terminal unit sets an emission wavelength thereof to be a reception wavelength of a device-side port connected to the central-office unit to be connected to the terminal unit

Fig. 25

## INTERNATIONAL SEARCH REPORT

| | International application No. |
|---|---|
| | **PCT/CN2019/127108** |

**A. CLASSIFICATION OF SUBJECT MATTER**

H04J 14/02(2006.01)i

According to International Patent Classification (IPC) or to both national classification and IPC

**B. FIELDS SEARCHED**

Minimum documentation searched (classification system followed by classification symbols)

H04J

Documentation searched other than minimum documentation to the extent that such documents are included in the fields searched

Electronic data base consulted during the international search (name of data base and, where practicable, search terms used)

CNPAT, CNKI, WPI, EPODOC: 波分复用, 合波, 路由, 波长, 合路, 分离器, 分波器, 选择, 不同, 端口, 滤波器, WDM, MUX, DEMUX, wave, wavelength, splitter, select+, different, filter, port

**C. DOCUMENTS CONSIDERED TO BE RELEVANT**

| Category* | Citation of document, with indication, where appropriate, of the relevant passages | Relevant to claim No. |
|---|---|---|
| X | CN 106911419 A (HISENSE BROADBAND MULTIMEDIA TECHNOLOGIES CO., LTD.) 30 June 2017 (2017-06-30) description, paragraphs [0002]-[0003] and [0034]-[0054], and figure 1 | 1-23 |
| X | CN 106788866 A (HISENSE BROADBAND MULTIMEDIA TECHNOLOGIES CO., LTD.) 31 May 2017 (2017-05-31) description, paragraphs [0002]-[0003] and [0017]-[0038], and figure 1 | 1-23 |
| A | CN 104363070 A (SHANGHAI SINO-TELECOM TECHNOLOGY CO., LTD. et al.) 18 February 2015 (2015-02-18) entire document | 1-23 |
| A | US 2009202246 A1 (OKI ELECTRIC INDUSTRY CO., LTD.) 13 August 2009 (2009-08-13) entire document | 1-23 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 March 2020** | **20 March 2020** |

| Name and mailing address of the ISA/CN | Authorized officer |
|---|---|
| **China National Intellectual Property Administration No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2019/127108**

| Patent document cited in search report | | | Publication date (day/month/year) | Patent family member(s) | | | Publication date (day/month/year) |
|---|---|---|---|---|---|---|---|
| CN | 106911419 | A | 30 June 2017 | None | | | |
| CN | 106788866 | A | 31 May 2017 | None | | | |
| CN | 104363070 | A | 18 February 2015 | None | | | |
| US | 2009202246 | A1 | 13 August 2009 | CN | 101510811 | A | 19 August 2009 |
| | | | | JP | 2009194524 | A | 27 August 2009 |
| | | | | EP | 2091166 | A1 | 19 August 2009 |

Form PCT/ISA/210 (patent family annex) (January 2015)

**REFERENCES CITED IN THE DESCRIPTION**

**Patent documents cited in the description**

- CN 201811591169